(19)

Europäisches
Patentamt
European
Patent Office
Office européen
des brevets

(11) **EP 3 993 514 B1**

(12) **EUROPEAN PATENT SPECIFICATION**

(45) Date of publication and mention
of the grant of the patent:
**13.03.2024  Bulletin 2024/11**

(21) Application number: **20855192.9**

(22) Date of filing: **14.08.2020**

(51) International Patent Classification (IPC):
**H04W 52/02** *(2009.01)*     **H04W 72/04** *(2023.01)*
**H04W 68/00** *(2009.01)*

(52) Cooperative Patent Classification (CPC):
**H04W 52/0229; H04W 52/0219; H04W 52/028;**
H04W 68/005; Y02D 30/70

(86) International application number:
**PCT/KR2020/095110**

(87) International publication number:
**WO 2021/034174 (25.02.2021 Gazette 2021/08)**

(54) **METHOD FOR TRANSMITTING AND RECEIVING SIGNAL IN WIRELESS COMMUNICATION SYSTEM, AND APPARATUS THEREFOR**

VERFAHREN ZUM SENDEN UND EMPFANGEN VON SIGNALEN IN EINEM DRAHTLOSEN
KOMMUNIKATIONSSYSTEM UND VORRICHTUNG DAFÜR

PROCÉDÉ DE TRANSMISSION ET DE RÉCEPTION DE SIGNAL DANS UN SYSTÈME DE
COMMUNICATION SANS FIL ET APPAREIL ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.08.2019  KR 20190100618**
**04.10.2019  KR 20190122980**

(43) Date of publication of application:
**04.05.2022  Bulletin 2022/18**

(73) Proprietor: **LG Electronics Inc.**
**SEOUL 07336 (KR)**

(72) Inventors:
• **HWANG, Seunggye**
Seoul 06772 (KR)
• **PARK, Changhwan**
Seoul 06772 (KR)
• **AHN, Joonkui**
Seoul 06772 (KR)
• **KIM, Jaehyung**
Seoul 06772 (KR)

(74) Representative: **Maikowski & Ninnemann**
**Patentanwälte Partnerschaft mbB**
**Postfach 15 09 20**
**10671 Berlin (DE)**

(56) References cited:
**KR-A- 20180 121 350     US-A1- 2019 090 193
US-A1- 2019 239 189**

• **HUAWEI ET AL: "UE-group wake-up signal",
3GPP DRAFT; R1-1901502, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Athens,
Greece; 20190225 - 20190301 16 February 2019
(2019-02-16), XP051599199, Retrieved from the
Internet:
URL:http://www.3gpp.org/ftp/tsg%5Fran/WG1%
5FRL1/TSGR1%5F96/Docs/R1%2D1901502%2Ez
ip [retrieved on 2019-02-16]**
• **HUAWEI ET AL: "UE-group wake-up signal",
3GPP DRAFT; R1-1905971, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE , vol. RAN WG1, no. Reno,
USA; 20190513 - 20190517 13 May 2019
(2019-05-13), XP051727428, Retrieved from the
Internet:
URL:http://www.3gpp.org/ftp/Meetings%5F3GP
P%5FSYNC/RAN1/Docs/R1%2D1905971%2Ezip
[retrieved on 2019-05-13]**

**(Cont. next page)**

- Qualcomm Incorporated: "WUS grouping design overview and UE distribution", 3GPP Draft; R2-1910466 WUS group design, 3rd Generation Partnership Project (3GPP), Mobile Competence Centre ; 650, route des Lucioles ; F-06921 Sophia-Antipolis Cedex ; France, vol. RAN WG2, no. Prague, Czech Republic; 20190826 - 20190830, 15 August 2019 (2019-08-15), XP051768244, Mobile Competence Centre ; 650, route des Lucioles ; F-06921 Sophia-Antipolis Cedex ; France
- LG Electronics: "Discussion on UE-grouping wake up signal in NB-IoT", 3GPP Draft; R1-1906690, 3rd Generation Partnership Project (3GPP), Mobile Competence Centre ; 650, route des Lucioles ; F-06921 Sophia-Antipolis Cedex ; France, vol. RAN WG1, no. Reno, USA; 20190513 - 20190517, 4 May 2019 (2019-05-04), XP051708726, Mobile Competence Centre ; 650, route des Lucioles ; F-06921 Sophia-Antipolis Cedex ; France

- Ericsson: "Mobility based WUS grouping", 3GPP Draft; R2-1910432 - Mobility based WUS grouping, 3rd Generation Partnership Project (3GPP), Mobile Competence Centre ; 650, route des Lucioles ; F-06921 Sophia-Antipolis Cedex ; France, vol. RAN WG2, no. Prague, Czech Republic; 20190826 - 20190830, 15 August 2019 (2019-08-15), XP051768211, Mobile Competence Centre ; 650, route des Lucioles ; F-06921 Sophia-Antipolis Cedex ; France

**Description**

**TECHNICAL FIELD**

The present disclosure relates to a method and apparatus for use in a wireless communication system.

**BACKGROUND ART**

Wireless communication systems are widely developed to provide various kinds of communication services including audio communications, data communications and the like. Generally, a wireless communication system is a kind of a multiple access system capable of supporting communications with multiple users by sharing available system resources (e.g., bandwidth, transmission power, etc.). For instance, multiple access systems include CDMA (code division multiple access) system, FDMA (frequency division multiple access) system, TDMA (time division multiple access) system, OFDMA (orthogonal frequency division multiple access) system, SC-FDMA (single carrier frequency division multiple access) system and the like.

US 2019/0090193 A1 discloses a base station encoding a wakeup signal so that a preamble of the wakeup signal indicates whether the wakeup signal is relevant to the UE. The UE selects a technique for detecting the wakeup signal based at least in part on a partial, full, or no synchronization. The wakeup signal is encoded with a system frame number. Wakeup signals for guardband/standalone UEs are provided.

In 3GPP documentR1-1901502 titled "UE-group wake-up signal", the design of group WUS is discussed and related observations and proposals are provided.

In 3GPP document R1-1905971 titled "UE-group wake-up signal", a detailed analysis on several aspects of UE-group WUS is given.

**DISCLOSURE**

**TECHNICAL PROBLEM**

An object of the present disclosure is to provide a method of efficiently transmitting and receiving a wake-up signal and apparatus therefor.

Another object of the present disclosure is to provide a method of efficiently generating/obtaining a sequence for a wake-up signal and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

The present invention is defined in the appended claims.

**ADVANTAGEOUS EFFECTS**

According to the present disclosure, a wake-up signal may be transmitted and received efficiently.

In addition, according to the present disclosure, a sequence for a wake-up signal may be generated/obtained efficiently.

It will be appreciated by persons skilled in the art that the effects that could be achieved with the present disclosure are not limited to what has been particularly described hereinabove and other advantages of the present disclosure will be more clearly understood from the following detailed description.

**DESCRIPTION OF DRAWINGS**

The accompanying drawings, which are included to provide a further understanding of the present disclosure, illustrate embodiments of the disclosure and together with the description serve to explain the principle of the present disclosure.

FIG. 1 illustrates physical channels used in a 3rd generation partnership project (3GPP) system and general signal transmission.

FIG. 2 illustrates a long-term evolution (LTE) radio frame structure.

FIG. 3 illustrates the structure of a slot of an LTE frame.

FIG. 4 illustrates the structure of a downlink subframe of an LTE system.

FIG. 5 illustrates the structure of a radio frame used in a new radio (NR) system.

FIG. 6 illustrates the structure of a slot of an NR frame.

FIG. 7 illustrates signal bands for MTC.

FIG. 8 illustrates scheduling in legacy LTE and MTC.

FIG. 9 illustrates transmission of narrowband Internet of things (NB-IoT) downlink physical channels/signals.

FIG. 10 illustrates a timing relationship between a wake-up signal (WUS) and a paging occasion (PO).

FIGS. 11 to 17 illustrate examples in which a user equipment (UE) group WUS is transmitted and received according to methods proposed in the present disclosure.

FIGS. 18 and 19 illustrate flowcharts of base station (BS) operations and UE operations to which the methods proposed in the present disclosure are applicable.

FIGS. 20 to 24 illustrate a system and communication devices to which the methods proposed in the present disclosure are applicable.

## BEST MODE

In the following description, downlink (DL) refers to communication from a base station (BS) to a user equipment (UE), and uplink (UL) refers to communication from the UE to the BS. In the case of DL, a transmitter may be a part of the BS, and a receiver may be a part of the UE. In the case of UL, a transmitter may be a part of the UE, and a receiver may be a part of the BS.

The technology described herein is applicable to various wireless access systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA may be implemented as radio technology such as universal terrestrial radio access (UTRA) or CDMA2000. The TDMA may be implemented as radio technology such as global system for mobile communications (GSM), general packet radio service (GPRS), or enhanced data rates for GSM evolution (EDGE). The OFDMA may be implemented as radio technology such as the Institute of Electrical and Electronics Engineers (IEEE) 802.11 (Wi-Fi), IEEE 802.16 (WiMAX), IEEE 802-20, evolved UTRA (E-UTRA), etc. The UTRA is a part of a universal mobile telecommunication system (UMTS). The 3rd generation partnership project (3GPP) long term evolution (LTE) is a part of an evolved UMTS (E-UMTS) using the E-UTRA. LTE-advance (LTE-A) or LTE-A pro is an evolved version of the 3GPP LTE. 3GPP new radio or new radio access technology (3GPP NR) or 5G is an evolved version of the 3GPP LTE, LTE-A, or LTE-A pro.

Although the present disclosure is described based on 3GPP communication systems (e.g., LTE-A, NR, etc.) for clarity of description, the present disclosure is not limited thereto. The LTE refers to the technology beyond 3GPP technical specification (TS) 36.xxx Release 8. In particular, the LTE technology beyond 3GPP TS 36.xxx Release 10 is referred to as the LTE-A, and the LTE technology beyond 3GPP TS 36.xxx Release 13 is referred to as the LTE-A pro. The 3GPP 5G means the technology beyond TS 36.xxx Release 15 and 3GPP NR refers to the technology beyond 3GPP TS 38.xxx Release 15. The LTE/NR may be called '3GPP system'. Herein, "xxx" refers to a standard specification number. The LTE/NR may be commonly referred to as '3GPP system'. Details of the background, terminology, abbreviations, etc. used herein may be found in documents published before the present disclosure.

### 3GPP LTE

- 36.211: Physical channels and modulation
- 36.212: Multiplexing and channel coding
- 36.213: Physical layer procedures
- 36.300: Overall description
- 36.304: User Equipment (UE) procedures in idle mode
- 36.331: Radio Resource Control (RRC)

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.304: User Equipment (UE) procedures in Idle mode and RRC Inactive stat

- 36.331: Radio Resource Control (RRC) protocol specification

Evolved UMTS terrestrial radio access network (E-UTRAN), LTE, LTE-A, LTE-A pro, and 5th generation (5G) systems may be generically called an LTE system. A next generation radio access network (NG-RAN) may be referred to as an NR system. A UE may be fixed or mobile. The term UE is interchangeably used with other terms such as terminal, mobile station (MS), user terminal (UT), subscriber station (SS), mobile terminal (MT), and wireless device. A BS is generally a fixed station communicating with a UE. The term BS is interchangeably used with other terms such as evolved Node B (eNB), general Node B (gNB), base transceiver system (BTS), and access point (AP).

## A. Physical Channels and Frame Structures

### Physical Channels and General Signal Transmission

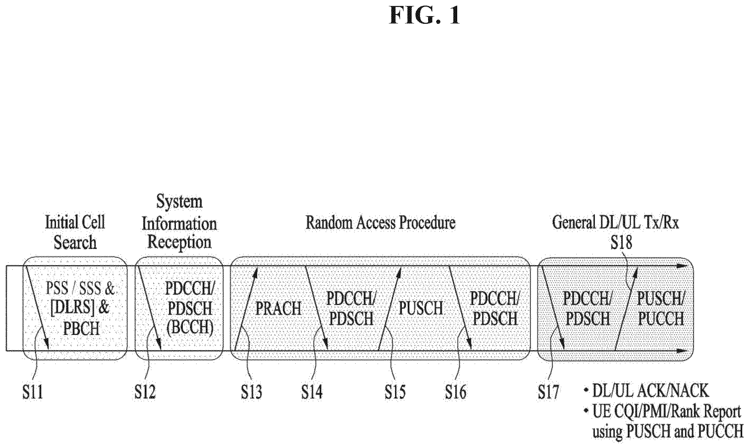

FIG. 1 is a diagram illustrating physical channels and a general signal transmission procedure in a 3GPP system. In a wireless communication system, a UE receives information from a BS on DL and transmits information to the BS on UL. The information transmitted and received between the UE and the BS includes data and various types of control information. There are many physical channels according to the types/uses of information transmitted and received between BS and the UE.

When a UE is powered on or enters a new cell, the UE performs initial cell search including acquisition of synchronization with a BS (S11). For the initial cell search, the UE synchronizes its timing with the BS and acquires information such as a cell identifier (ID) by receiving a primary synchronization signal (PSS) and a secondary synchronization signal (SSS) from the BS. The UE may further acquire information broadcast in the cell by receiving a physical broadcast channel (PBCH) from the BS. During the initial cell search, the UE may further monitor a DL channel state by receiving a downlink reference signal (DL RS).

After the initial cell search, the UE may acquire more detailed system information by receiving a physical downlink control channel (PDCCH) and receiving a physical downlink shared channel (PDSCH) corresponding to the PDCCH (S12).

Subsequently, to complete the connection to the BS, the UE may perform a random access procedure with the BS (S13 to S16). Specifically, the UE may transmit a random access preamble on a physical random access channel (PRACH) (S13) and may receive a PDCCH and a random access response (RAR) to the preamble on a PDSCH corresponding to the PDCCH (S14). The UE may then transmit a physical uplink shared channel (PUSCH) by using scheduling information included in the RAR (S15), and perform a contention resolution procedure including reception of a PDCCH and a PDSCH corresponding to the PDCCH (S 16).

After the above procedure, the UE may receive a PDCCH and/or a PDSCH from the BS (S17) and transmit a PUSCH and/or a physical uplink control channel (PUCCH) to the BS (S18) in a general UL/DL signal transmission procedure. Control information that the UE transmits to the BS is generically called uplink control information (UCI). The UCI includes a hybrid automatic repeat and request acknowledgement/negative acknowledgement (HARQ ACK/NACK), a scheduling request (SR), and channel state information (CSI). The CSI includes a channel quality indicator (CQI), a precoding matrix indicator (PMI), a rank indication (RI), and so on. In general, UCI is transmitted on the PUCCH. However, if control information and data should be transmitted simultaneously, the control information may be transmitted on the PUSCH. In addition, the UE may transmit the UCI aperiodically on the PUSCH, upon receipt of a request/command from a network.

### Radio Frame Structures

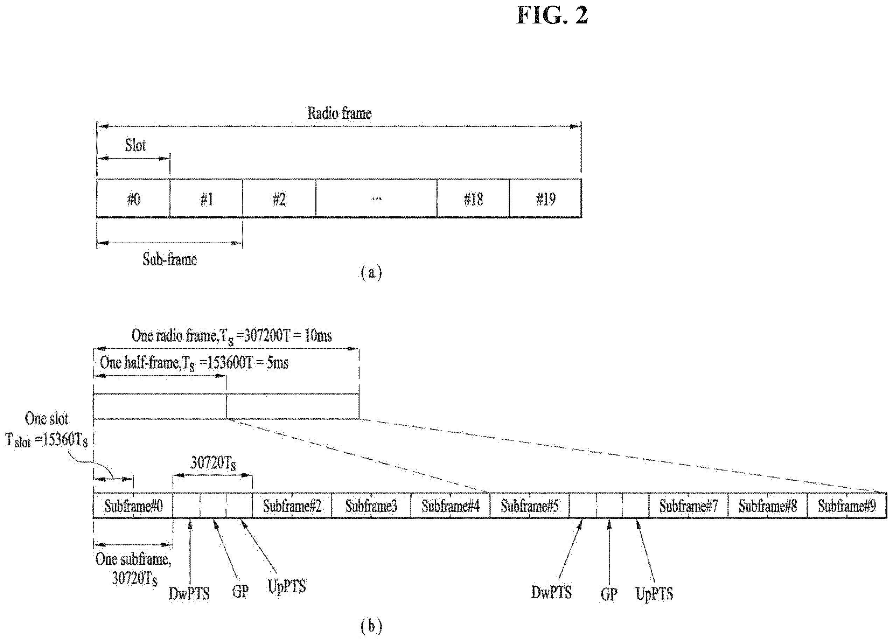

FIG. 2 illustrates LTE radio frame structures. LTE supports frame type 1 for frequency division duplex (FDD), frame type 2 for time division duplex (TDD), and frame type 3 for an unlicensed cell (UCell). Up to 31 secondary cells (SCells) may be aggregated in addition to a primary cell (PCell). Unless otherwise specified, operations described in the disclosure may be applied independently on a cell basis. In multi-cell aggregation, different frame structures may be used for different cells. Further, time resources (e.g., a subframe, a slot, and a subslot) within a frame structure may be generically referred to as a time unit (TU).

FIG. 2(a) illustrates frame type 1. A DL radio frame is defined by 10 1-ms subframes (SFs). A subframe includes 14 or 12 symbols according to a cyclic prefix (CP). In a normal CP case, a subframe includes 14 symbols, and in an extended CP case, a subframe includes 12 symbols. Depending on multiple access schemes, a symbol may be an OFDM(A) symbol or an SC-FDM(A) symbol. For example, a symbol may refer to an OFDM(A) symbol on DL and an SC-FDM(A) symbol on UL. An OFDM(A) symbol may be referred to as a cyclic prefix-OFDMA(A) (CP-OFDM(A)) symbol, and an SC-FMD(A) symbol may be referred to as a discrete Fourier transform-spread-OFDM(A) (DFT-s-OFDM(A)) symbol.

FIG. 2(b) illustrates frame type 2. Frame type 2 includes two half frames. A half frame includes 4 (or 5) general subframes and 1 (or 0) special subframe. According to a UL-DL configuration, a general subframe is used for UL or DL. A subframe includes two slots.

The above-described radio frame structures are merely exemplary, and the number of subframes in a radio frame, the number of slots in a subframe, and the number of symbols in a slot may vary.

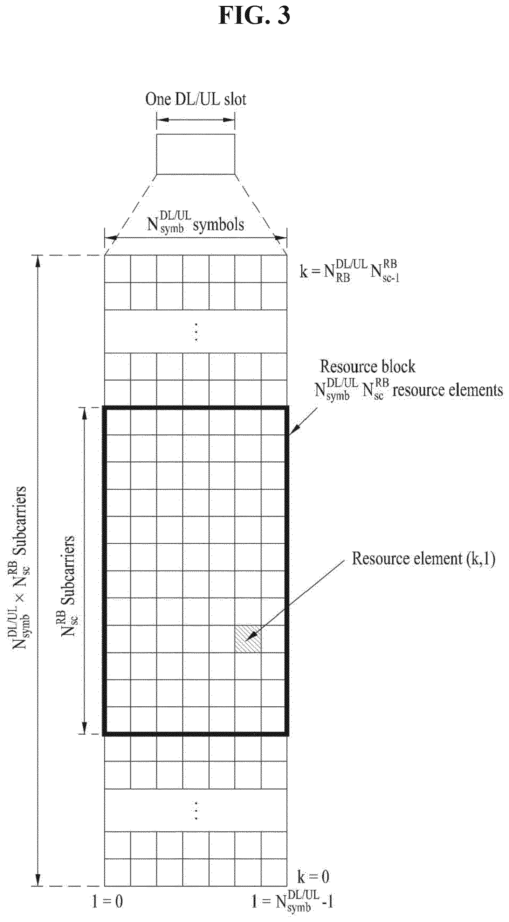

FIG. 3 illustrates a slot structure in an LTE frame.

Referring to FIG. 3, a slot includes a plurality of symbols in the time domain by a plurality of resource blocks (RBs) in the frequency domain. A symbol may refer to a symbol duration. A slot structure may be represented as a resource grid including $N^{DL/UL}_{RB} \times N^{RB}_{sc}$ subcarriers and $N^{DL/UL}_{symb}$ symbols. $N^{DL}_{RB}$ represents the number of RBs in a DL slot, and $N^{UL}_{RB}$ represents the number of RBs in a UL slot. $N^{DL}_{RB}$ and $N^{UL}_{RB}$ are dependent on a DL bandwidth and a UL bandwidth, respectively. $N^{DL}_{Symb}$ represents the number of symbols in the DL slot, and $N^{UL}_{symb}$ represents the number of symbols in the UL slot. $N^{RB}_{sc}$ represents the number of subcarriers in one RB. The number of symbols in a slot may vary according to a subcarrier spacing (SCS) and a CP length. For example, one slot includes 7 symbols in the normal CP case, whereas one slot includes 6 symbols in the extended CP case.

An RB is defined as $N^{DL/UL}_{symb}$ (e.g., 7) consecutive symbols in the time domain by $N^{RB}_{sc}$ (e.g., 12) consecutive subcarriers in the frequency domain. The RB may be a physical resource block (PRB) or a virtual resource block (VRB), and PRBs may be mapped to VRBs in a one-to-one correspondence. Two RBs each being located in one of the two slots of a subframe may be referred to as an RB pair. The two RBs of an RB pair may have the same RB number (or RB index). A resource including one symbol by one subcarrier is referred to as a resource element (RE) or tone. Each RE of a resource grid may be uniquely identified by an index pair (k, l) in a slot where k is a frequency-domain index ranging from 0 to $N^{DL/UL}_{RB} \times N^{RB}_{sc}-1$ and l is a time-domain index ranging from 0 to $N^{DL/UL}_{symb}-1$.

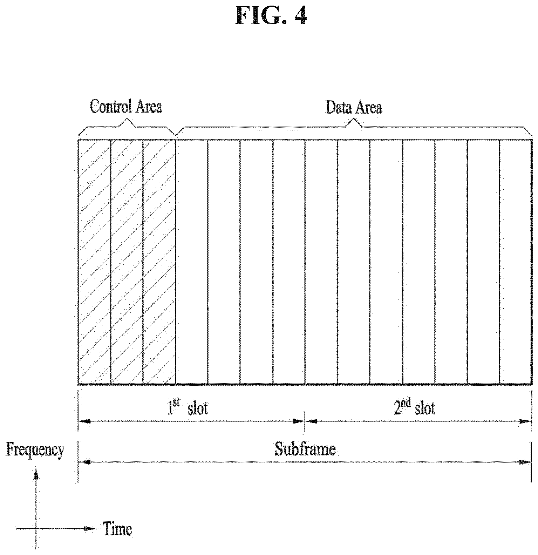

FIG. 4 illustrates a downlink subframe in an LTE system.

Referring to FIG. 4, up to three (or four) OFDM(A) symbols at the beginning of the first slot of a subframe correspond to a control region. The remaining OFDM(A) symbols correspond to a data region in which a PDSCH is allocated, and a basic resource unit of the data region is an RB. DL control channels include physical control format indicator channel (PCFICH), PDCCH, physical hybrid-ARQ indicator channel (PHICH), and so on. The PCFICH is transmitted in the first OFDM symbol of a subframe, conveying information about the number of OFDM symbols used for transmission of control channels in the subframe. The PHICH is a response to a UL transmission, conveying an HARQ ACK/NACK signal. Control information delivered on the PDCCH is called downlink control information (DCI). The DCI includes UL resource allocation information, DL resource control information, or a UL transmit power control command for any UE group.

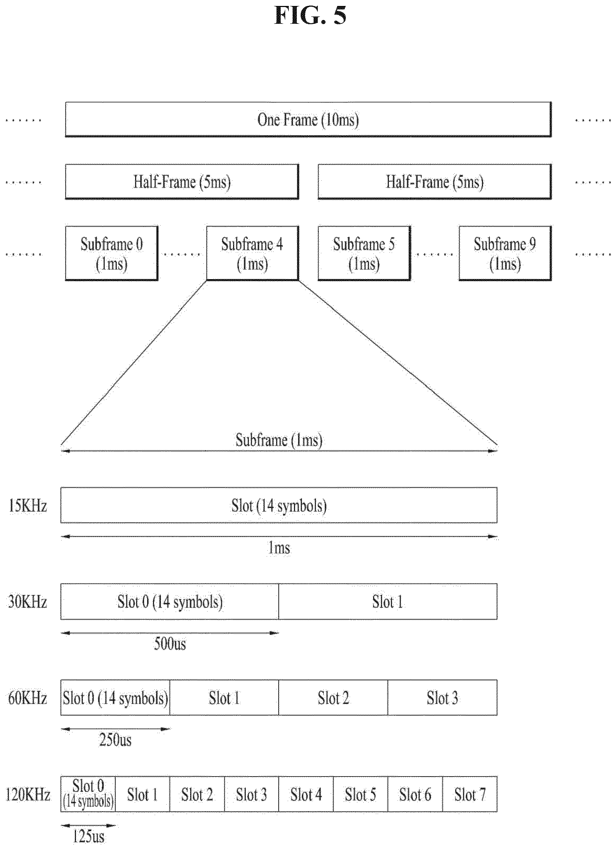

FIG. 5 illustrates a radio frame structure used in an NR system.

In NR, UL and DL transmissions are configured in frames. Each radio frame has a length of 10ms and is divided into two 5-ms half frames (HFs). Each half frame is divided into five 1-ms subframes. A subframe is divided into one or more slots, and the number of slots in a subframe depends on an SCS. Each slot includes 12 or 14 OFDM(A) symbols according to a CP. When a normal CP is used, each slot includes 14 OFDM symbols. When an extended CP is used, each slot includes 12 OFDM symbols. A symbol may include an OFDM symbol (CP-OFDM symbol) and an SC-FDMA symbol (or DFT-s-OFDM symbol).

Table 1 exemplarily illustrates that the number of symbols per slot, the number of slots per frame, and the number of slots per subframe vary according to SCSs in the normal CP case.

[Table 1]

| SCS ($15 \times 2^\mu$) | $N^{slot}_{symb}$ | $N^{frame,\mu}_{slot}$ | $N^{subframe,\mu}_{slot}$ |
|---|---|---|---|
| 15KHz ($\mu=0$) | 14 | 10 | 1 |
| 30KHz ($\mu=1$) | 14 | 20 | 2 |
| 60KHz ($\mu=2$) | 14 | 40 | 4 |
| 120KHz ($\mu=3$) | 14 | 80 | 8 |
| 240KHz ($\mu=4$) | 14 | 160 | 16 |
| * $N^{slot}_{Symb}$: number of symbols in a slot <br><br> * $N^{frame,u}_{slot}$: number of slots in a frame <br><br> * $N^{subframe,u}_{slot}$: number of slots in a subframe | | | |

Table 2 illustrates that the number of symbols per slot, the number of slots per frame, and the number of slots per subframe vary according to SCSs in the extended CP case.

[Table 2]

| SCS ($15 \times 2^\mu$) | $N_{symb}^{slot}$ | $N_{slot}^{frame,\mu}$ | $N_{slot}^{subframe,\mu}$ |
|---|---|---|---|
| 60KHz ($\mu$=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a TU) including the same number of symbols may be configured differently for the aggregated cells.

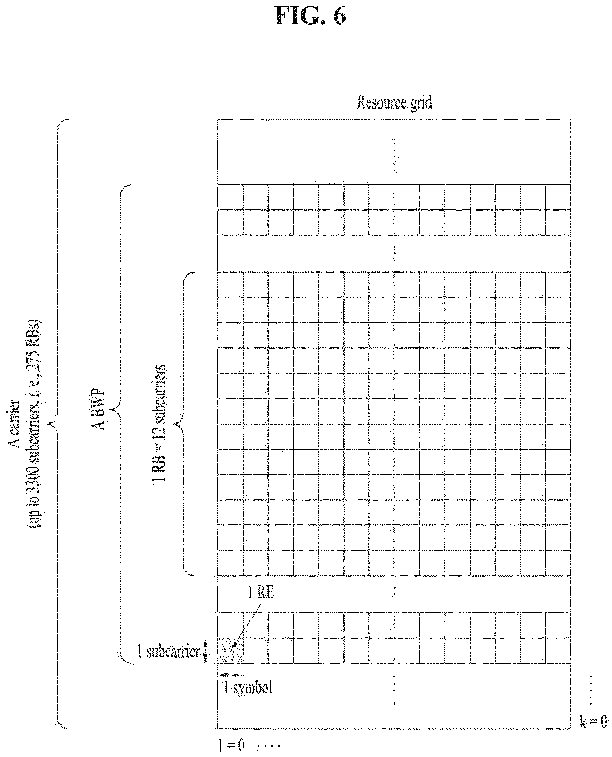

FIG. 6 illustrates a slot structure of an NR frame.

A slot includes a plurality of symbols in the time domain. For example, one slot includes 14 symbols in the normal CP case and 12 symbols in the extended CP case. A carrier includes a plurality of subcarriers in the frequency domain. An RB may be defined by a plurality of (e.g., 12) consecutive subcarriers in the frequency domain. A bandwidth part (BWP) may be defined by a plurality of consecutive (P)RBs in the frequency domain and correspond to one numerology (e.g., SCS, CP length, and so on). A carrier may include up to N (e.g., 5) BWPs. Data communication may be conducted in an active BWP, and only one BWP may be activated for one UE. Each element of a resource grid may be referred to as an RE, to which one complex symbol may be mapped.

### B. DL Channels

A BS transmits related signals on DL channels to a UE, and the UE receives the related signals on the DL channels from the BS.

(1) Physical Downlink Shared Channel (PDSCH)

The PDSCH delivers DL data (e.g., a DL shared channel transport block (DL-SCH TB)) and adopts a modulation scheme such as quadrature phase shift keying (QPSK), 16-ary quadrature amplitude modulation (16 QAM), 64-ary QAM (64 QAM), or 256-ary QAM (256 QAM). A TB is encoded to a codeword. The PDSCH may deliver up to two codewords. The codewords are individually subjected to scrambling and modulation mapping, and modulation symbols from each codeword are mapped to one or more layers. An OFDM signal is generated by mapping each layer together with a demodulation reference signal (DMRS) to resources, and transmitted through a corresponding antenna port.

(2) Physical Downlink Control Channel (PDCCH)

The PDCCH delivers DCI and adopts QPSK as a modulation scheme. One PDCCH includes 1, 2, 4, 8, or 16 control channel elements (CCEs) according to its aggregation level (AL). One CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, or the like). A plurality of CORESETs for one UE may overlap with each other in the time/frequency domain. A CORESET may be configured by system information (e.g., a master information block (MIB)) or UE-specific higher-layer signaling (e.g., RRC signaling). Specifically, the number of RBs and the number of symbols (3 at maximum) in the CORESET may be configured by higher-layer signaling.

The UE acquires DCI delivered on the PDCCH by decoding (so-called blind decoding) a set of PDCCH candidates. A set of PDCCH candidates decoded by a UE are defined as a PDCCH search space set. A search space set may be a common search space (CSS) or a UE-specific search space (USS). The UE may acquire DCI by monitoring PDCCH candidates in one or more search space sets configured by an MIB or higher-layer signaling. Each CORESET configuration is associated with one or more search space sets, and each search space set is associated with one CORESET configuration. One search space set is determined based on the following parameters.

- *controlResourceSetId*: A set of control resources related to the search space set.
- *monitoringSlotPeriodicityAndOffset*: A PDCCH monitoring periodicity (in slots) and a PDCCH monitoring offset (in slots).
- *monitoringSymbolsWithinSlot:* A PDCCH monitoring pattern (e.g., the first symbol(s) in a CORESET) in a PDCCH monitoring slot.

- *nrofcandidates:* The number of PDCCH candidates (one of 0, 1, 2, 3, 4, 5, 6, and 8) for each AL={1, 2, 4, 8, 16}.

Table 3 lists exemplary features of each search space type.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

## C. Machine Type Communication (MTC)

MTC, which is a type of data communication involving one or more machines, may be applied to machine-to-machine (M2M) or Internet of things (IoT). A machine refers to an entity that does not require direct human manipulation or intervention. For example, machines include a smart meter equipped with a mobile communication module, a vending machine, a portable terminal having an MTC function, and so on. For example, services such as meter reading, water level measurement, use of surveillance cameras, and inventory reporting of vending machines may be provided through MTC. MTC has the features of a small amount of transmission data and intermittent UL/DL data transmissions/receptions. Therefore, it is efficient to lower the unit cost of MTC devices and reduce battery consumption in correspondence with low data rates. An MTC device generally has low mobility, and thus MTC is conducted in a channel environment which hardly changes.

The 3GPP has applied MTC since release 10, and MTC may be implemented to satisfy the requirements of low cost and low complexity, coverage enhancement, and low power consumption. For example, 3GPP Release 12 added features for low-cost MTC devices and thus defined UE category 0. A UE category is an indicator indicating the amount of data that a UE may process in a communication modem. A UE of UE category 0 may reduce baseband/radio frequency (RF) complexity by using a reduced peak data rate, a half-duplex operation with relaxed RF requirements, and a single reception (Rx) antenna. In 3GPP Release 12, enhanced MTC (eMTC) was introduced, and the price and power consumption of MTC UEs were further lowered by operating the MTC UEs only at 1.08 MHz (that is, 6 RBs), a minimum frequency bandwidth supported in legacy LTE.

Herein, MTC may be used interchangeably with eMTC, LTE-M1/M2, BL/CE (bandwidth reduced low complexity/coverage enhanced), non-BL UE (in enhanced coverage), NR MTC (or Reduced Capability or RedCap), enhanced BL/CE, or other equivalent terms. In addition, an MTC UE/device includes a UE/device with MTC functionality (e.g., a smart meter, a bending machine, a mobile UE with MTC functionality).

Physical signals and channels used for MTC are similar to the physical signals and channels described above with reference to FIG. 1, and general signal transmission based on the physical signals and channels may be performed similarly to the procedure described above with reference to FIG. 1. Although a PDCCH for MTC may be referred to as an MTC PDCCH (MPDCCH), the MPDCCH may be collectively referred to as the PDCCH.

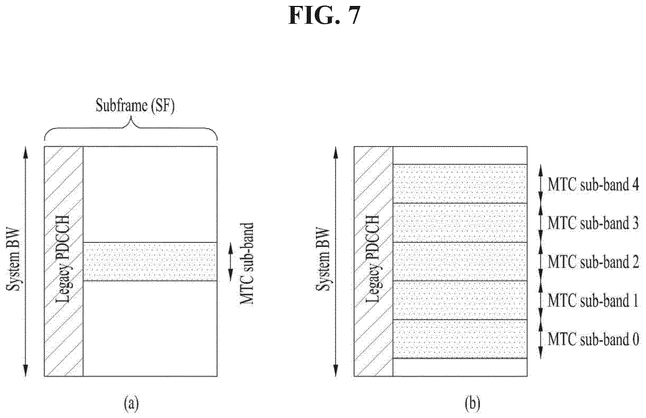

FIG. 7 illustrates MTC signal bands.

Referring to FIG. 7, to reduce the unit cost of MTC UEs, MTC may be conducted only in a specific band (or channel band) (MTC subband or narrowband (NB)) of the system bandwidth of a cell, regardless of the system bandwidth of the cell. For example, an MTC UE may perform a UL/DL operation only in a 1.08-MHz frequency band. 1.08 MHz corresponds to six consecutive PRBs in the LTE system, and is defined to enable MTC UEs to follow the same cell search and random access procedures as LTE UEs. FIG. 7(a) illustrates an MTC subband configured at the center of a cell (e.g., center 6 PRBs), and FIG. 7(b) illustrates a plurality of MTC subbands configured within a cell. The plurality of MTC subbands may be configured contiguously/non-contiguously in the frequency domain. Physical channels/signals for MTC may be transmitted and received in one MTC subband. In the NR system, an MTC subband may be defined in consideration of a frequency range and an SCS. In the NR system, for example, the size of an MTC subband may be defined as X consecutive PRBs (i.e., $0.18*X*(2^\mu)$ MHz bandwidth) (see Table 1 for $\mu$). X may be set to 20 according to the size of a synchronization signal/physical broadcast channel (SS/PBCH) block. In the NR system, MTC may operate in at least one BWP. A plurality of MTC subbands may be configured in a BWP.

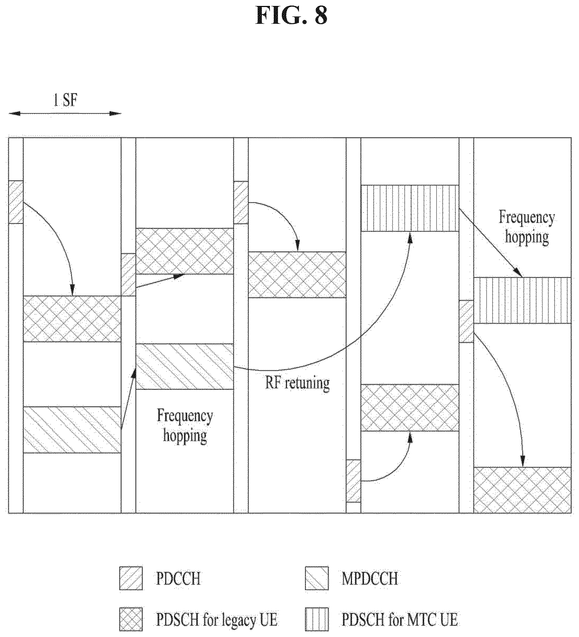

FIG. 8 illustrates scheduling in legacy LTE and MTC.

Referring to FIG. 8, a PDSCH is scheduled by a PDCCH in legacy LTE. Specifically, the PDCCH may be transmitted in the first N OFDM symbols in a subframe (N=1 to 3), and the PDSCH scheduled by the PDCCH is transmitted in the same subframe. In MTC, a PDSCH is scheduled by an MPDCCH. Accordingly, an MTC UE may monitor MPDCCH candidates in a search space within a subframe. The monitoring includes blind decoding of the MPDCCH candidates. The MPDCCH delivers DCI, and the DCI includes UL or DL scheduling information. The MPDCCH is multiplexed with the PDSCH in FDM in a subframe. The MPDCCH is repeatedly transmitted in up to 256 subframes, and the DCI carried in the MPDCCH includes information about an MPDCCH repetition number. In DL scheduling, when the repeated transmissions of the MPDCCH end in subframe #N, transmission of the PDSCH scheduled by the MPDCCH starts in subframe #N+2. The PDSCH may be repeatedly transmitted in up to 2048 subframes. The MPDCCH and the PDSCH may be transmitted in different MTC subbands. In UL scheduling, when the repeated transmissions of the MPDCCH end in subframe #N, transmission of a PUSCH scheduled by the MPDCCH starts in subframe #N+4. For example, when the PDSCH is repeatedly transmitted in 32 subframes, the PDSCH may be transmitted in the first 16 subframes in a first MTC subband, and in the remaining 16 subframes in a second MTC subband. MTC operates in a half-duplex mode. MTC HARQ retransmission is adaptive and asynchronous.

### D. Narrowband Internet of Things (NB-IoT)

NB-IoT is a narrowband Internet of things technology supporting a low-power wide area network through an existing wireless communication system (e.g., LTE or NR). Further, NB-IoT may refer to a system supporting low complexity and low power consumption in a narrowband (NB). Since an NB-IoT system uses the same OFDM parameters as those of an existing system, such as an SCS, there is no need to allocate an additional band separately for the NB-IoT system. For example, one PRB of an existing system band may be allocated for NB-IoT. Considering that an NB-IoT UE perceives a single PRB as a carrier, PRB and carrier may be interpreted as the same meaning in the description of NB-IoT.

NB-IoT may operate in a multi-carrier mode. In NB-IoT, a carrier may be defined as an anchor type carrier (i.e., anchor carrier or anchor PRB) or a non-anchor type carrier (i.e., non-anchor carrier or non-anchor PRB). From the perspective of a BS, the anchor carrier may mean a carrier carrying a narrowband PSS (NPSS), a narrowband SSS (NSSS), and a narrowband PBCH (NPBCH) for initial access, and a narrowband PDSCH (NPDSCH) for a narrowband system information block (N-SIB). That is, in NB-IoT, a carrier for initial access may be referred to as an anchor carrier, and the other carrier(s) may be referred to as non-anchor carrier(s). One or more anchor carriers may exist in the system.

While NB-IoT is described mainly in the context of being applied to the legacy LTE system in the present disclosure, the description may be extended to a next-generation system (e.g., NR system). In the present disclosure, the description of NB-IoT may be extended to MTC serving a similar technical purpose (e.g., low-power, low-cost, and CE). The term NB-IoT may be replaced with other equivalent terms such as NB-LTE, NB-IoT enhancement, enhanced NB-IoT, further enhanced NB-IoT, and NB-NR.

For NB-IoT downlink, physical channels such as a narrowband physical broadcast channel (NPBCH), a narrowband physical downlink shared channel (NPDSCH), and a narrowband physical downlink control channel (NPDCCH) may be provided, and physical signals such as a narrowband primary synchronization signal (NPSS), a narrowband primary synchronization signal (NSSS), and a narrowband reference signal (NRS) may be provided.

The structure of a NB-IoT frame may vary depending on SCSs. For example, the NB-IoT system may support an SCS of 15 kHz and an SCS of 3.75 kHz. However, the NB-IoT frame structure is not limited thereto, and other SCSs (e.g., 30 kHz, etc.) may also be considered for NB-IoT based on different time/frequency units. In addition, although the present disclosure describes the NB-IoT frame structure based on the LTE system frame structure, this is only for convenience of description, and the present disclosure is not limited thereto. Thus, it is apparent that methods proposed in the present disclosure are applicable to NB-IoT based on frame structures of next-generation systems (e.g., NR system).

An NB-IoT frame structure for the 15 kHz SCS may be configured to be identical to the frame structure of the above-described legacy system (i.e., LTE system). That is, a 10-ms NB-IoT frame may include 10 1-ms NB-IoT subframes, each including two 0.5-ms NB-IoT slots. Each 0.5-ms NB-IoT slot may include 7 OFDM symbols.

For the 3.75 kHz SCS, a 10-ms NB-IoT frame includes 5 2-ms NB-IoT subframes, each including 7 OFDM symbols and one guard period (GP). A 2-ms NB-IoT subframe may also be referred to as an NB-IoT slot or an NB-IoT resource unit (RU).

NB-IoT DL physical resources may be configured based on the configuration of physical resources in another wireless communication system (e.g., LTE or NR), except that an NR system bandwidth is a certain number of RBs (e.g., one RB, i.e., 180 kHz). For example, when the NB-IoT DL supports only the 15 kHz SCS, the NB-IoT DL physical resources may be configured as the resource area of one RB (i.e., one PRB) in the frequency domain, to which the resource grid of the LTE system illustrated in FIG. 4 is limited, as described above. Likewise, for NB-IoT UL physical resources, the system bandwidth may be limited to one RB.

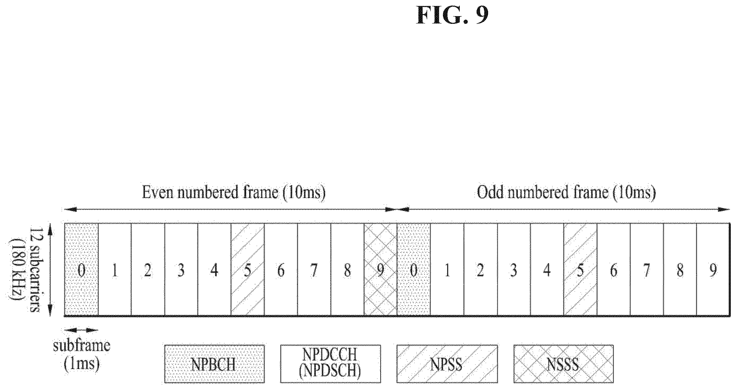

FIG. 9 illustrates transmission of NB-IoT DL physical channels/signals. An NB-IoT DL physical channel/signal is transmitted in one PRB and supports the 15 kHz SCS/multi-tone transmission.

Referring to FIG. 9, the NPSS is transmitted in the sixth subframe of every frame, and the NSSS is transmitted in the last (e.g., tenth) subframe of every even-numbered frame. A UE may acquire frequency, symbol, and frame synchronization using the synchronization signals (NPSS and NSSS) and search 504 physical cell IDs (PCIDs) (i.e., BS IDs). The NPBCH is transmitted in the first subframe of every frame, carrying an NB-MIB. The NRS is provided as an RS for DL physical channel demodulation and generated in the same manner as in LTE. However, an NB-PCID (NCell ID or NB-IoT BS ID) is used as an initialization value for generation of an NRS sequence. The NRS is transmitted through one or two antenna ports. The NPDCCH and the NPDSCH may be transmitted in the remaining subframes except for the subframes carrying the NPSS, the NSSS, and the NPBCH. The NPDCCH and the NPDSCH may not be transmitted in the same subframe. The NPDCCH carries DCI, and the DCI supports three types of DCI formats. DCI format N0 includes NPUSCH scheduling information, and DCI formats N1 and N2 include NPDSCH scheduling information. The NPDCCH may be transmitted up to 2048 times, for CE. The NPDSCH is used to transmit data (e.g., TB) of a transport channel such as a DL-SCH and a paging channel (PCH). A maximum TB size (TBS) is 680 bits, and a TB may be repeatedly transmitted up to 2048 times, for CE.

### E. Wake-Up Signal (WUS)

In MTC and NB-IoT, a WUS may be used to reduce power consumption related to paging monitoring. The WUS is a physical layer signal indicating whether the UE is to monitor a paging signal (e.g., an MPDCCH/NPDCCH scrambled with a paging radio network temporary identifier (P-RNTI)) according to cell configurations. When the UE is configured with no eDRX (that is, when the UE is configured with only DRX), the WUS may be related to one PO (N=1). On the other hand, when the UE is configured with eDRX, the WUS may be related to one or more POs (N $\geq$ 1). Upon detecting the WUS, the UE may monitor N POs related to the WUS. On the other hand, upon detecting no WUS, the UE may skip PO monitoring and maintain the sleep mode until monitoring the next WUS.

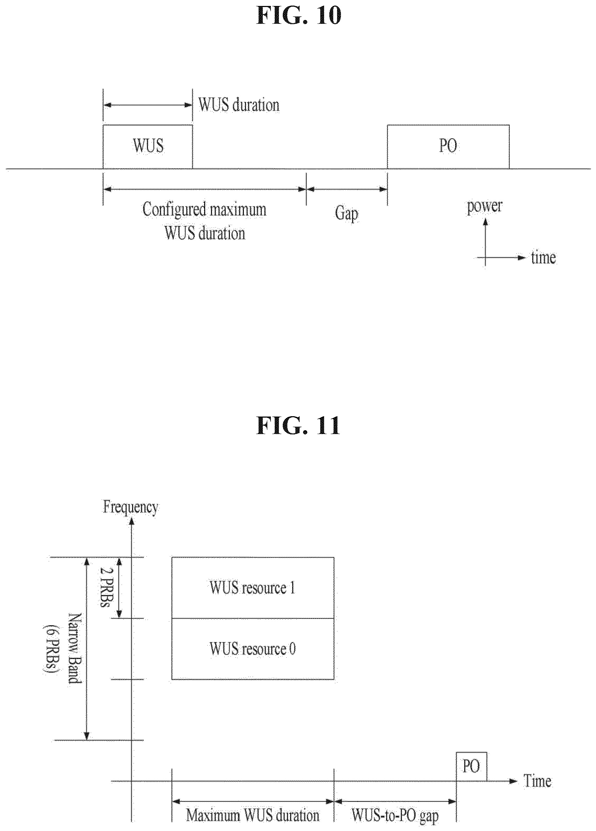

FIG. 10 illustrates a timing relationship between a WUS and a PO.

The UE receives configuration information on the WUS from the BS and monitors the WUS based on the WUS configuration information. The WUS configuration information may include, for example, a maximum WUS duration, the number of consecutive POs related to the WUS, gap information, and so on. The maximum WUS duration may refer to a maximum time period in which the WUS is capable of being transmitted. The maximum WUS duration may be expressed as a ratio with the maximum number of repetitions (e.g., Rmax) related to the PDCCH (e.g., MPDCCH, NPDCCH). The UE may expect that the WUS is repeatedly transmitted within the maximum WUS duration, but the actual number of times that the WUS is transmitted may be less than the maximum number of times that the WUS is transmitted within the maximum WUS duration. For example, if the UE is in good coverage, the number of WUS repetitions may be small. For convenience, a resource/occasion on which the WUS is capable of being transmitted within the maximum WUS duration may be referred to as a WUS resource. The WUS resource may be defined as a plurality of consecutive OFDM symbols and a plurality of consecutive subcarriers. The WUS resource may be defined as a plurality of consecutive OFDM symbols and a plurality of consecutive subcarriers in a subframe or slot. For example, the WUS resource may be defined as 14 consecutive OFDM symbols and 12 consecutive subcarriers. If the UE detects the WUS, the UE may not perform WUS monitoring until a first PO related to the WUS. If the UE detects no WUS within the maximum WUS duration, the UE may not monitor a paging signal during POs related to the WUS (or remain in the sleep mode).

### F. Symbols, Abbreviations, and Terms

The following symbols/abbreviations/terms are used in this document.

- PDCCH: PDCCH is the abbreviation of Physical Downlink Control Channel. The PDCCH refers to a physical layer communication channel for providing DCI. The methods proposed in the present disclosure are applicable to various PDCCH structures such as an enhanced-PDCCH (EPDCCH), an MPDCCH, and an NPDCCH even unless otherwise specified. In this document, the PDCCH is used as a term representing various PDCCH structures unless stated otherwise.
- DCI: DCI is the abbreviation of Downlink Control Information.
- Acknowledgement/negative-acknowledgment (A/N) for cell A: The A/N for cell A refers to A/N information for a DL signal (e.g., data (e.g., PDSCH) or a control channel (e.g., PDCCH related to semi-persistent scheduling (SPS))) received on cell A. A/N information may be referred to as ACK/NACK information.
- Add-MO: The Add-MO refers to additional modulation order or additionally used modulation order.
- WUS: The WUS refers to a wake-up signal.
- UE group WUS (or group WUS): The UE group WUS is a WUS which can be identified for each group. Here, each group may be obtained by grouping UEs monitoring the same PO into a plurality of groups.
- Common WUS: The common WUS refers to a WUS commonly used for a plurality of UE groups.
- Legacy WUS: The legacy WUS refers to a WUS monitored by WUS capable UEs with no ability to identify a UE group that monitors the same PO (e.g., WUS capable UEs defined in 3GPP technical specification (TS) Rel-15). In other words, the legacy WUS means a WUS for WUS capable UEs that do not support the (UE) group WUS.
- Legacy WUS resource: The legacy WUS resource refers to a resource for transmitting and receiving the legacy WUS. For example, the legacy WUS resource may be determined as described with reference to FIG. 10. Specifically, the UE may determine the end time of the maximum WUS duration including the legacy WUS resource by applying gap information to a PO configured for the UE, and the BS may determine the end time of the maximum WUS duration including the legacy WUS resource by applying gap information for a specific UE to a PO configured for the specific UE.
- PAPR: PARR is the abbreviation of Peak-to-Average Power Ratio.
- PRB: PRB is the abbreviation of Physical Resource Block.
- PRB pair: The PRB pair refers to two RBs located one by one in two slots of a subframe.
- PO: PO is the abbreviation of Paging Occasion.
- WUS-to-PO gap: The WUS-to-PO gap refers to a gap between the start time of a PO and the end time of WUS transmission.
- Rel-15: Rel-15 refers to 3GPP TS Release 15.
- Rel-16: Rel-16 refers to 3GPP TS Release 16.

## G. Methods Proposed in Present Disclosure

The present disclosure proposes methods of determining a WUS sequence for each time and/or frequency-domain resource when a UE group WUS is used and when the UE group WUS is identified by a plurality of resources in the time and/or frequency domain.

In LTE Rel-15 NB-IoT and MTC, a WUS has been introduced for the purpose of power saving of the UE. The WUS is a signal indicating whether there is an actual paging transmission in a paging search space at a specific location. When the BS intends to transmit paging on a PO at a specific location, the BS may transmit the WUS at WUS transmission location(s) related to the corresponding PO. The UE may monitor the WUS transmission location(s) related to the PO at the specific location, if the UE detects the WUS at the WUS transmission location(s), the UE may expect that the paging will be transmitted on the corresponding PO. If the UE detects no WUS at the WUS transmission location(s), the UE may expect no paging on the corresponding PO, thereby reducing power consumption.

In LTE Rel-16 NB-IoT and MTC, the introduction of a UE group WUS (or group WUS) has been discussed to improve the power saving effect of the Rel-15 WUS. In the case of the Rel-15 WUS, all UEs having the same DRX (or eDRX) state and configured with the same WUS-to-PO gap are configured to expect the same WUS. Thus, when the BS transmits the WUS for other UEs using the same PO, the UE may always attempt to decode related paging, regardless of whether the paging is targeted to the UE. This may increase unnecessary power consumption of the UE and act as an obstacle in the power saving. To solve such a problem, grouping of UEs monitoring the same PO into a plurality of groups and use of the UE group WUS which can be identified for each group has been discussed in Rel-16.

When UE group WUSs are applied, if the UE detects a UE group WUS for a UE group to which the UE belongs, the UE may monitor a paging signal on a PO configured for the UE. On the other hand, if the UE detects a UE group WUS for another UE group to which the UE does not belong, the UE may not monitor any paging signals on the PO configured for the UE (or skip monitoring). Therefore, when the UE group WUS of Rel-16 is used, it is possible to preventing the UE from monitoring a paging signal upon detection of a group WUS for another UE group, thereby reducing unnecessary power consumption of the UE and maximizing the power saving effect.

The present disclosure proposes methods for solving problems that may occur due to PAPR increases and time drifting errors when the UE group WUS is used and when the UE group WUS is identified by a time/frequency-domain resource.

**(Method 0)**

In Method 0, proposed is a method of determining phase shift values of UE group WUS sequences included in a WUS sequence set when a UE group WUS sequence capable of identifying a UE group based on a phase shift is used and when a plurality of WUS sequence sets are configurable.

In this case, the WUS sequence using the phase shift based UE group identification may be defined according to Equation 1 below. When the proposed method is applied to NB-IoT or MTC, if the following conditions are satisfied: m=0, 1, ..., 131 and m'=m+132x, $w_{group}(m')$ may denote a WUS sequence of an (x+1)-th subframe from a point (or time) at which WUS transmission starts. In Equation 1 below, g denotes a parameter selected by a UE group index, G denotes the total number of UE groups, and f(g,G,m) denote a function for generating the phase shift. In addition, w(m') denotes a base sequence to which no phase shift is applied, and for example, a WUS sequence defined in Rel-15 (see Clauses 6.11B and 10.2.6B of 3GPP TS 36.211 V15.5.0) may be used as w(m').

$$[Equation\ 1]$$

$$w_{group}(m') = w(m')f(g, G, m)$$

For example, f(g, G, m), which is the function for generating the phase shift, may be defined as follows: $e^{\frac{j2\pi gm}{G}}$. In this example, Equation 1 may be represented as shown in Equation 2 below.

$$[Equation\ 2]$$

$$\mathrm{w_{group}}(m') = w(m')e^{\frac{j2\pi gm}{G}}$$

As an example of the proposed method, $N_{SEQ}$ WUS sequence sets may be configured. If the index of a WUS sequence set is defined by $i_{SEQ}$ = 1, ..., $N_{SEQ}$-1, the value of g, which is the parameter determining the phase shift value, may be determined according to Equation 3 as follows.

$$[Equation\ 3]$$

$$g = \left(N_{SEQ} \times \alpha - i_{SEQ}\right) \times g_0$$

In Equation 3, $\alpha$ is a parameter used to determine a WUS sequence in a WUS sequence set and may be determined by the UE_ID of the UE, designated by the BS, or predetermined by specifications for the purpose of a common WUS. For example, the UE_ID, which is unique information about the UE, may be a parameter defined in Rel-15 (see Clause 7.1 of 3GPP TS 36.304 V15.4.0).

In Equation 3, the value of $N_{SEQ}$ may be predetermined by specifications. Alternatively, the value of $N_{SEQ}$ may be determined by the BS or configured by signaling. This has an advantage in that the BS may freely adjust the expected performance of the WUS sequence by controlling the number of WUS sequence sets depending on situations. Alternatively, the value of $N_{SEQ}$ may be determined implicitly by the number of different time/frequency-domain WUS resources used for the UE group WUS. For example, when only one time/frequency WUS resource is used for the UE group WUS, $N_{SEQ}$ may be set to 1. If a plurality of time/frequency WUS resources are used, $N_{SEQ}$ may be set to 2. This has an advantage in that the number of WUS sequence sets may be supported depending on situations and signaling overhead may be reduced.

In Equation 3, $i_{SEQ}$ may vary depending on the time/frequency-domain location of a used WUS resource. In this case, the value of $i_{SEQ}$ may be determined by the index of the WUS resource, determined by the unique information about the UE (e.g., UE_ID), or designated by the BS through signaling.

**(Method 1)**

In Method 1, it is assumed that a UE group WUS sequence capable of identifying a UE group based on a phase shift is used and two or more frequency-domain WUS resources are configured on the same time-domain resource.

In the method proposed in Method 1, the phase shift based UE group WUS sequence may be generated according to Equation 1. As a specific example, when Equation 2 is used, the value of g may be determined according to the method proposed in Method 1.

According to the method proposed in Method 1 of the present disclosure, when Equation 1 (or Equation 2) is used and when a plurality of frequency-domain resources are configured on the same time-domain resource, the value of g in Equation 1 may be determined such that the following two conditions are satisfied.

(Condition 1-1) The phase interval between different UE group WUSs using the same frequency-domain resource is maximized.

(Condition 1-2) The value of g varies different between different UE group WUSs using different frequency-domain resources.

As an example for satisfying the above conditions, it may be considered that Method 1 is applied to a UE group WUS of MTC. FIG. 11 schematically illustrates an example in which a UE group WUS is applied by using two orthogonal frequency-domain resources, each having a size of two PRBs in MTC. If a set of phase shift values of a WUS sequence used for the UE group WUS is $\{g_1, g_2, g_3, ... g_N\}$ and if Method 1 is applied such that the above conditions are satisfied in the example of FIG. 11, $\{g_1, g_3, ... , g_{(N-1)}\}$ and $\{g_2, g_4, ... , g_N\}$ may be used for WUS resource 0 and WUS resource 1, respectively.

Particularly, in the above example, it may be considered that all adjacent phase shift values have a constant phase interval. In other words, it may be considered that a reference phase shift value $g_0$ exists and a phase shift value with an a-th magnitude in ascending order in a set of phase shift values satisfies the following relationship: $g_a=g_0*a$. In this case, to satisfy the above conditions, it may be determined that phase shift values with odd values of a and phase shift values with even values of a are used for different frequency-domain WUS resources. In the example of FIG. 11, it may be determined that the phase shift values with odd values of a are used for WUS resource 0 and the phase shift values with even values of a are used for WUS resource 1 are used.

In the example above, the value of a may be determined by the index of a UE group. This may be interpreted to mean that the position of a frequency-domain WUS resource related to the UE group and the phase shift value thereof may be determined by the index of the UE group. In the example of FIG. 11, a UE with an UE group index of a may be configured to use a phase shift value of $g_0*a$, and the location of a frequency-domain WUS resource may be determined according to whether a is an even or odd number (for example, WUS resource 0 may be selected when a is an odd number and WUS resource 1 may be selected when a is an even number).

When a plurality of frequency-domain WUS resources are configured on the same time-domain resource, Method 1 has the advantage of preventing an increase in the PAPR due to simultaneous transmission of a plurality of UE group WUSs. If WUS sequences having the same phase shift value are transmitted on the plurality of frequency-domain WUS resources, the PAPR may increase, which occurs when the same sequence is repeated in the frequency domain. At the same time, when the phase shift based WUS sequence generation rule is applied, Method 1 has the advantage of reducing false alarms in the UE group WUS, which is caused by timing drift errors, by extending the phase distance between UE groups using the same time and frequency-domain WUS resources.

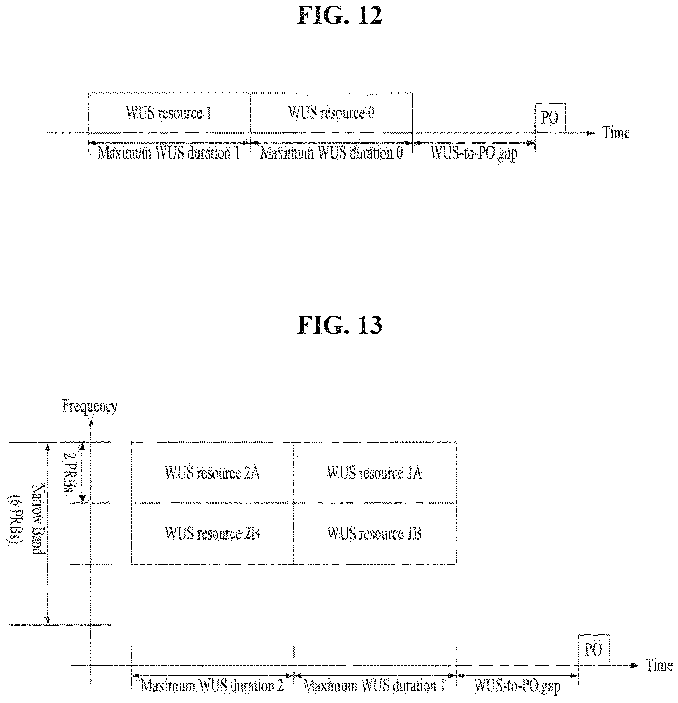

The above-proposed principles of Method 1 may be equally applied when two or more time-domain WUS resources are configured on one frequency-domain resource. For example, assuming that there are two time-domain WUS resources related to one PO as shown in FIG. 12, phase shift values available in WUS resource 1 and phase shift values available in WUS resource 0 may be determined in the same way as when phase shift values applied to different frequency-domain WUS resources are determined according to Method 1.

**(Method 2)**

In Method 2, it is assumed that a plurality of time-domain resources are used for a UE group WUS related to one PO and one or more frequency-domain WUS resources are configurable on each time-domain WUS resource.

According to the method proposed in Method 2 of the present disclosure, when one or more frequency-domain WUS resource are available on the same time-domain WUS resource and when there are multiple time-domain WUS resource, it may be determined that the following two conditions need to be satisfied.

(Condition 2-1) When a plurality of WUS resources are located on the same frequency-domain WUS resource and located on different time-domain WUS resources at the same time, it may be determined that the plurality of WUS resources need to use different UE group WUS sequence sets.

(Condition 2-2) When a plurality of WUS resources are located on the same time-domain WUS resource and located on different frequency-domain WUS resources at the same time, it may be determined that the plurality of WUS resources need to use different UE group WUS sequence sets.

The UE group WUS sequence set refers to a set of WUS sequences that UEs belonging to a UE group may expect. In this case, a UE belonging to the UE group may expect one or more WUS sequences in the UE group WUS sequence set.

As an example for satisfying the above conditions, it may be considered that Method 2 is applied to a UE group WUS of MTC. In this case, a predefined rule may exist between each PRB pair (e.g., a frequency-domain WUS resource unit in MTC) and a WUS sequence set, and such a rule may vary between time-domain WUS resources. For example, a relationship between a WUS resource and a WUS sequence set may be defined according to the rules shown in Table 4.

In Table 4 below, Set-A and Set-B may be indices for identifying WUS sequence sets or parameter values used to generate WUS sequences.

[Table 4]

| Index of PRB pair within a Narrowband | Sequence set of the second time domain | Sequence set of the first time domain |
| --- | --- | --- |
| 2 | *Set-A* | *Set-B* |
| 1 | *Sei B* | *Set-A* |
| 0 | *Set-A* | *Set-B* |

When Table 4 is used and when two frequency-domain WUS resources are used on the same time-domain resource, the two frequency-domain WUS resources may be determined to be always contiguous to each other. For example, in Table 4, it may be determined that only PRB pair indices: {0, 1} or {1, 2} are available. This may prevent inefficiency that occurs because it is difficult to use a PRB pair index of 1 in the frequency domain if PRB pair indices of frequency-domain WUS resources are separated from each other as in {0, 2}. At the same time, it may also prevent a phenomenon in which the PAPR increases due to the repetition of the same WUS sequence on the same time-domain WUS resource. To this end, the BS may inform the number of frequency-domain WUS resources used on a specific time-domain WUS resource, and at the same time, also inform whether the positions of used PRB pairs are either {0, 1} or {1, 2}.

FIG. 13 schematically illustrates an example in which two time-domain WUS resources are configured for a UE group WUS in MTC and two orthogonal frequency-domain WUS resources each having a size of two PRBs are configured on each time-domain WUS resource. In the example of FIG. 13, it may be configured that different WUS sequence sets may be used for WUS resource 2A and WUS resource 2B. In addition, it may be configured that a WUS sequence set used for WUS resource 2A is used for WUS resource 1B and a WUS sequence set used for WUS resource 2B is used for WUS resource 1A.

**(Method 3, claimed embodiment)**

In Method 3, it is assumed that a plurality of time-domain resources are configurable for a UE group WUS related to one PO. In Method 3, when the UE group WUS is used in NB-IoT, one or two time-domain WUS resources are configured by the BS to support the UE group WUS.

The WUS resource for the UE group WUS may include a WUS resource available for a legacy WUS (i.e., WUS defined in Rel-15).

According to the Method 3, the scrambling initialization value of a WUS varies to use a different WUS sequence for each WUS resource. The scrambling initialization value is determined as a relative position to the WUS resource for the legacy WUS.

In this case, the scrambling initialization value may be determined as a (initialization) value for generating a scrambling sequence, which is used to generate w(m) in Equation 2. Alternatively, the scrambling initialization value may be defined as an initialization value for generating a scrambling sequence $c_{n_f,n_s}$ in Equation 4, where Equation 4 is used in Rel-15 MTC and NB-IoT.

[Equation 4]

$$w(m) = \theta_{n_f,n_s}(m') \cdot e^{-\frac{j\pi u n(n+1)}{131}}$$

$$m = 0, 1, \dots, 131$$

$$m' = m + 132x$$

$$n = m \bmod 132$$

$$\theta_{n_f,n_s}(m') = \begin{cases} 1, & \text{if } c_{n_f,n_s}(2m') = 0 \text{ and } c_{n_f,n_s}(2m'+1) = 0 \\ -1, & \text{if } c_{n_f,n_s}(2m') = 0 \text{ and } c_{n_f,n_s}(2m'+1) = 1 \\ j, & \text{if } c_{n_f,n_s}(2m') = 1 \text{ and } c_{n_f,n_s}(2m'+1) = 0 \\ -j, & \text{if } c_{n_f,n_s}(2m') = 1 \text{ and } c_{n_f,n_s}(2m'+1) = 1 \end{cases}$$

$$u = (N_{ID}^{Ncell} \bmod 126) + 3$$

$$x = 0, 1, \dots, M - 1$$

In Equation 4, w(m) denotes a WUS sequence, $N_{ID}^{Ncell}$ denotes cell identification information (e.g., physical cell identity (ID)) on a cell in which the UE operates, and mod denotes a modulo operation.

Based on this structure, the method proposed in Method 3 comprises determine the scrambling initialization value according to Equation 5 below. In Equation 5, resource identification information $c_g$ is determined such that the WUS resource is determined as a relative position to the legacy WUS resource. If the location of the WUS resource of the UE group WUS used by a specific UE is the same as that of the legacy WUS, $c_g$ is determined to have a value of 0. On the other hand, if the location of the WUS resource of the UE group WUS is different from that of the legacy WUS resource (the WUS resource is configured to be contiguous to the legacy WUS resource), $c_g$ is determined to have a value of 1. A first WUS resource is configured to include the legacy WUS resource, and a second WUS resource is configured immediately prior to the first WUS resource in the time domain.

[Equation 5]

$$c_{init\_WUS} = c_g \cdot 2^{29} + (N_{ID}^{Ncell} + 1)\left(\left(10 n_{f\_start\_PO} + \left\lfloor \frac{n_{s\_start\_PO}}{2} \right\rfloor\right) \bmod 2048 + 1\right) 2^9 + N_{ID}^{Ncell}$$

In Equation 5, $c_{init\_WUS}$ denotes the scrambling initialization value, $c_g$ denotes the resource identification information of the WUS resource to be monitored by the UE, $N_{ID}^{Ncell}$ denotes the cell identification information on the cell in which the UE operates, $n_{f\_start\_PO}$ denotes a first frame of a first (or start) PO related to the UE group WUS, $n_{s\_start\_PO}$ denotes a first slot of the first PO related to the UE group WUS, $\lfloor \ \rfloor$ denotes a flooring operation, and mod denotes a modulo operation. As shown in Equation 5, the scrambling initialization value $c_{init\_WUS}$ may include at least 30 bits from bit #0 to bit #30. Specifically, the scrambling initialization value, $c_{init\_WUS}$ may be configured to include the cell identification information, $N_{ID}^{Ncell}$ from bit #0 and include the resource identification information of the resource for the UE group WUS, $c_g$ from bit #29. In addition, the scrambling initialization value $c_{init\_WUS}$ may be configured to include information on the starting position of the PO in the time domain (e.g., $(N_{ID}^{Ncell} + 1)\left(\left(10 n_{f\_start\_PO} + \left\lfloor \frac{n_{s\_start\_PO}}{2} \right\rfloor\right) \bmod 2048 + 1\right)$ from bit #9. According to Equation 5, since different scrambling sequences are generated based on the resource identification information of the WUS resource, the UE group WUS may be identified for each resource for the UE group WUS.

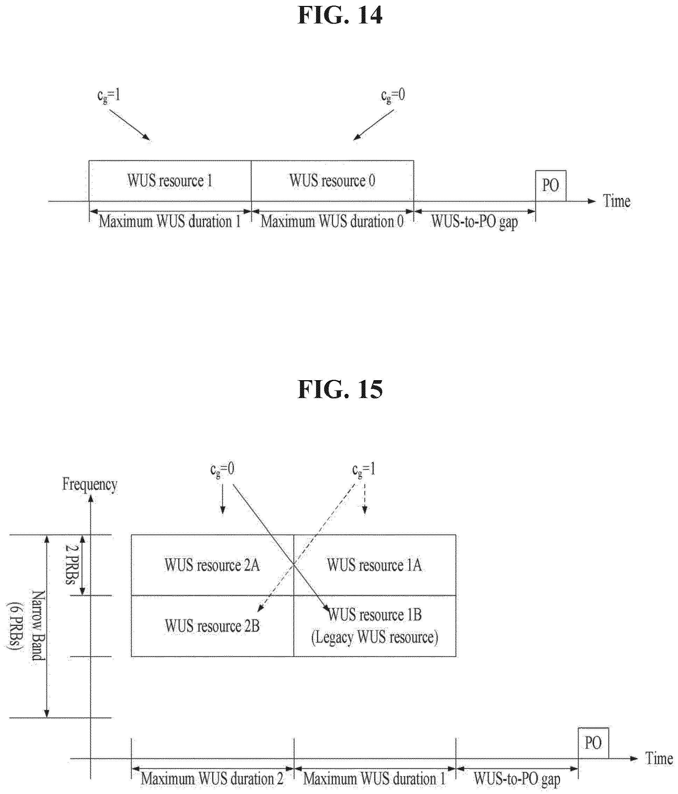

FIG. 14 schematically illustrates an example in which the method based on Equation 5 is applied to Method 3. In the example of FIG. 14, WUS resource 0 is used as a legacy WUS resource, and both or either WUS resource 0 or WUS resource 1 are used as a UE group WUS resource. When both WUS resource 0 and WUS resource 1 are used for the UE group WUS resource, WUS resource 0 is configured to include the legacy WUS resource, and WUS resource 1 is configured immediately prior to WUS resource 0 in the time domain. UEs expecting a UE group WUS on WUS resource 0 are configured to have a value of $c_g$ = 0 in Equation 5, and UEs expecting a UE group WUS on WUS resource 1 are configured to have a value of $c_g$ = 1 in Equation 5. A WUS sequence related to a WUS resource for a specific UE is a WUS sequence given based on the scrambling sequence w(m) generated with the initialization value $c_{init\_WUS}$, which is determined based on the resource identification information $c_g$ on the WUS resource for the specific UE. Based on the fact that the WUS resource for the specific UE is WUS resource 0, the resource identification information of the WUS resource for the specific UE has a value of 0. Based on the fact that the WUS resource for the specific UE is WUS resource 1, the resource identification information of the WUS resource for the specific UE has a value of 1.

The method proposed in Method 3 may have an advantage in that there is no extra signaling overhead because the method follows the predetermined UE group WUS sequence generation rule. In addition, when the location of a legacy WUS resource is used for a UE group WUS and when a legacy WUS is used as a common WUS for UE group WUSs, the same WUS sequence (generation) rule may be applied.

As a variant that is not claimed, a case opposite to the that of FIG. 14 may be applied. That is, $c_g$ may be configured to have a value of 1 for WUS resource 0, which is the location of a legacy WUS resource, and have a value of 0 for WUS resource 1. The reason for this operation may be not to use a legacy WUS as a common WUS at the location of WUS resource 0. This reverse operation may be explicitly designated by a higher layer signal. Alternatively, the operation may be implicitly designated and interpreted by a higher layer signal that indicates whether a legacy WUS sequence is used as a common WUS sequence for UE group WUSs at the location of WUS resource 0.

**(Method 4)**

In Method 4, it is assumed that one or more time-domain resources may be used for a UE group WUS related to one PO and one or more frequency-domain WUS resources may be configured on each time-domain WUS resource. As a particular example of the method proposed in Method 4, when the UE group WUS is used in MTC, it may be configured that one or two time-domain WUS resources are configured by the BS for the UE group WUS, and one or two frequency-domain WUS resources are configured by the BS for the UE group WUS on each time-domain resource. It this case, the WUS resource for the UE group WUS may or may not include a WUS resource available for a legacy WUS (WUS defined in Rel-15).

According to the method proposed in Method 4, when the scrambling initialization value of a WUS varies to differentiate a WUS sequence used in any WUS resource from a WUS sequence used in another WUS resource in the same time domain (or frequency domain), the scrambling initialization value may be determined as a relative position to the WUS resource for the legacy WUS.

In this case, the scrambling initialization value may be determined as a value for generating a scrambling sequence, which is used to generate w(m) in Equation 2. Alternatively, the scrambling initialization value may be defined as an initialization value for generating the scrambling sequence $c_{n_f,n_s}$ in Equation 4, where Equation 4 is used in Rel-15 MTC and NB-IoT.

Based on this structure, the method proposed in Method 4 may propose to determine the scrambling initialization value according to Equation 5. In Equation 5, $c_g$ may be determined such that the WUS resource is determined as a relative position to the legacy WUS resource. For example, if the location of the WUS resource of the UE group WUS used by a specific UE is the same as that of the legacy WUS, $c_g$ may be determined to have a value of 0. On the other hand, if the location of the WUS resource of the UE group WUS is different from that of the legacy WUS resource (for example, if the WUS resource is configured immediately prior to the legacy WUS resource), $c_g$ may be determined according to the following conditions.

- If the UE group WUS resource and the legacy WUS resource are located at the same position in the time domain but located at different positions in the frequency domain, $c_g$ may be configured to have a value of 1.
- If the UE group WUS resource and the legacy WUS resource are located at the same position in the frequency domain but located at different positions in the time domain, $c_g$ may be configured to have a value of 1.
- If the UE group WUS resource and the legacy WUS resource are located at different positions in both the time and frequency domains, $c_g$ may be configured to have a value of 0.

FIG. 15 schematically illustrates an example in which the method based on Equation 5 is applied to Method 4. In the example of FIG. 15, WUS resource 1B may be used as a legacy WUS resource, and one or more of WUS resource 1A, WUS resource 1B, WUS resource 2A, and WUS resource 2B may be used as a UE group WUS resource. In this case, UEs expecting a UE group WUS on WUS resource 1B or WUS resource 2A may be configured to have a value of $c_g = 0$ in Equation 5, and UEs expecting a UE group WUS on WUS resource 1A or WUS resource 2B may be configured to have a value of $c_g = 1$ in Equation 5.

The method proposed in Method 4 may have an advantage in that there is no extra signaling overhead because the method follows the predetermined UE group WUS sequence generation rule. In addition, when the location of a legacy WUS resource is used for a UE group WUS and when a legacy WUS is used as a common WUS for UE group WUSs, the same WUS sequence (generation) rule may be applied. At the same time, the effect of PAPR reduction may be obtained by allowing UE group WUSs using the same time-domain resource to use different sequences. In addition, it is possible to preventing time drift errors by allowing UE group WUSs using the same frequency-domain resource to use different sequences.

As another example, a case opposite to the example of FIG. 15 may be applied. That is, $c_g$ may be configured to have a value of 1 for WUS resource 1B and WUS resource 2A and have a value of 0 for WUS resource 1A and WUS resource 2B. The reason for this operation may be not to use a legacy WUS as a common WUS at the location of WUS resource 1B. This reverse operation may be explicitly designated by a higher layer signal. Alternatively, the operation may be implicitly designated and interpreted by a higher layer signal that indicates whether a legacy WUS sequence is used as a common WUS sequence for UE group WUSs at the location of WUS resource 0.

**(Method 4-1)**

In Method 4-1, it may be considered as a special case of the structures considerable in Method 4 that two UE group WUS resources using no legacy WUS resources are configured on the same time-domain WUS resource. For example, when a UE group WUS is used in MTC, it may be configured that two UE group WUS resources are configured in the same time domain as that used by a legacy WUS and the two UE group WUS resources do not overlap with a legacy WUS resource.

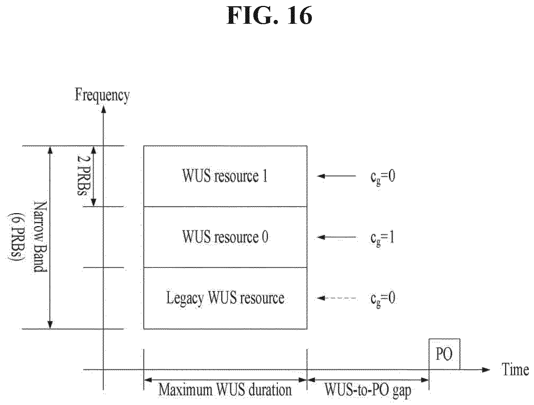

FIG. 16 schematically illustrates an example of Method 4-1. In the example of FIG. 16, since the legacy WUS resource is not affected by $c_g$, the same effect as that of $c_g = 0$ may be assumed. WUS resource 0 and WUS resource 1 may be configured to have different values of $c_g$. In the example of FIG. 16, WUS resource 0 is configured to have a value of $c_g = 1$ and WUS resource 1 is configured to a value of $c_g = 0$, and vice versa.

**(Method 4-2)**

In Method 4-2, it is proposed as another method of achieving the same effect as the method proposed in Method 4 that all WUS resources are configured to have different scrambling initialization values. In this case, the scrambling initialization value of each WUS resource may be predetermined as a relative position to a legacy WUS resource. For example, if up to four UE group WUS resources are configurable in MTC, a total of four scrambling initialization values may be used. The initial scrambling value applied to each WUS resource may be configured to have one of 0 to 3 depending on the relative position to the legacy WUS resource.

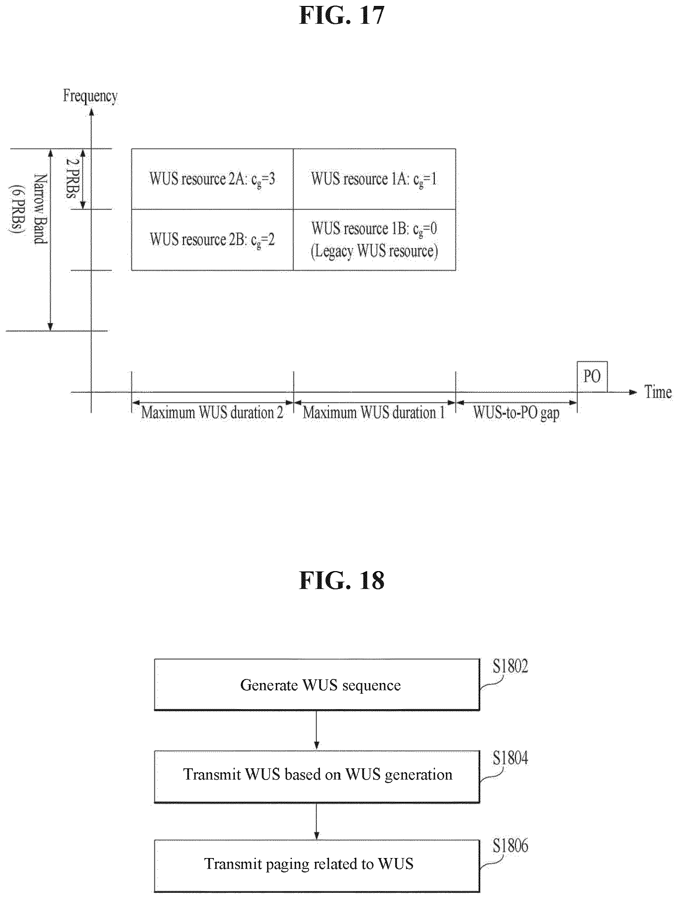

FIG. 17 schematically illustrates an example of the proposed in Method 4-2. In the example of FIG. 17, WUS resource 1B refers to a UE group WUS resource configured in the same time and frequency domains as the legacy WUS resource. In this case, WUS resource 1B may be configured to have a value of $c_g = 0$. The remaining three WUS resources may be configured to have values of $c_g = 1$ to 3 with no overlap.

The values of $c_g$ shown in FIG. 17 are randomly determined for convenience of explanation. Accordingly, it is obvious that the principles or ideas of the present disclosure are equally applicable when different scrambling initialization values are determined according to predetermined rules.

**(Method 5)**

In Method 5, it is assumed that a legacy WUS resource and a UE group WUS resource are configurable at different positions. In addition, it is assumed that a common WUS sequence and a UE group WUS sequence are identified by phase shift values on one WUS resource. In this case, for example, the phase shift value may be determined by the value of g of Equation 2. The method proposed in Method 5 may be applied to determine the common WUS sequence in a UE group WUS.

For the method proposed in Method 5, one of the following options may be used.

- Option 5-1) If the UE group WUS resource is not a legacy WUS resource, the value of g used to generate the common WUS sequence may be predefined by specifications.
- Option 5-2) If the UE group WUS resource is not a legacy WUS resource, the value of g used to generate the common WUS sequence may be configured for each WUS resource. In this case, the value of g may be configured for each WUS resource by a higher layer signal.
- Option 5-3) If the UE group WUS resource is not a legacy WUS resource, the value of g used to generate the common WUS sequence may be set to be the same as the value of g used to generate the common WUS sequence for the legacy WUS resource. If the value of g for the legacy WUS resource is indicated by a higher layer signal, the value of g may be applied to other WUS resources.

**(Method 6)**

In Method 6, it is proposed that when g of Equation 2 is configured to have values other than 0 (that is, when a legacy WUS sequence is not used as a common WUS sequence), the phase shift value for a common WUS sequence is determined based on the number of UE groups.

For example, it may be assumed that the value of g is determined according to Equation 6 below. In Equation 6, $\alpha$ is a predetermined integer value, and for example, the value of $\alpha$ may be 14. The UE group index refers an index used by the UE to determine a UE group WUS sequence. If the BS configures that N UE groups are used for any WUS resource, the UE group index may be configured to have a value between 0 and N-1.

$$[\text{Equation 6}]$$
$$g = \alpha \cdot (\text{UE gruop index} + 1)$$

If the common WUS sequence is determined to have a phase shift value different from that of the legacy WUS sequence under the above assumption, the value of g for determining the phase shift value of the common WUS sequence may be defined as follows: $g = \alpha \cdot (N + 1)$, where N denotes the number of UE groups used for any WUS resource as described above.

The purpose of the proposed method is to keep the smallest phase difference between the common WUS sequence and other WUS sequences (e.g., UE group WUS sequence, legacy WUS sequence, etc.).

**Flowchart of Operations to Which Methods Proposed in Present Disclosure Are Applicable**

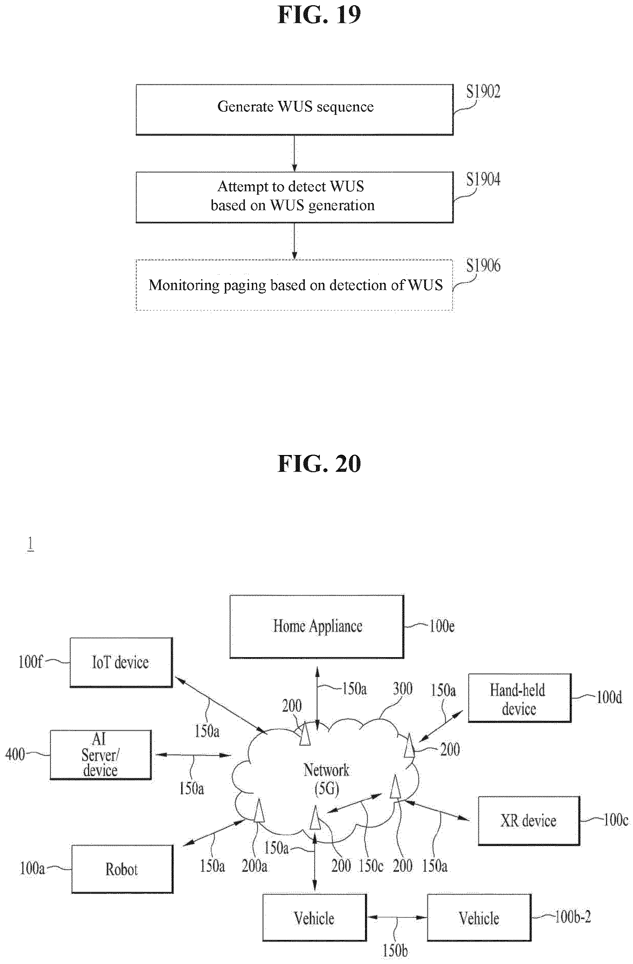

FIGS. 18 and 19 illustrate flowcharts of BS operations and UE operations to which the methods proposed in the present disclosure are applicable.

(1) BS Operations

FIG. 18 illustrates a flowchart of BS operations to which the methods proposed in the present disclosure are applicable.

Referring to FIG. 18, the BS may generate at least one sequence for a WUS (or at least one WUS sequence) (S1802). The BS may generate the sequence for the WUS based on Method 3 proposed in the present disclosure. In this example, the at least one (WUS) sequence includes a WUS sequence for a UE group (to which a specific UE expected to receive a paging signal belongs) (or a UE group WUS sequence).

The BS transmits at least one WUS based on the generated WUS sequence (S1804). The at least one WUS includes WUS for the UE group (to which the specific UE expected to receive the paging signal belongs) (or a UE group WUS) (or a group WUS). The BS transmits the WUS (UE group WUS or group WUS) to the UE group based on the WUS sequence for the UE group (or UE group WUS sequence).

The BS transmits the paging signal on a PO related to the transmitted WUS (i.e., UE group WUS or group WUS) (S1806). For example, the paging signal may include a control channel related to paging messages (e.g., a PDCCH scrambled with a P-RNTI, a PDCCH for paging, an MPDCCH, or an NPDCCH).

(2) UE operations

FIG. 19 illustrates a flowchart of UE operations to which the methods proposed in the present disclosure are applicable.

The UE may generate at least one sequence for a WUS (or at least one WUS sequence) (S1902). For example, the UE may generate the sequence for the WUS based on Method 3 proposed in the present disclosure. The at least one WUS sequence includes a WUS sequence for a UE group to which the UE belongs (or a UE group WUS sequence).

The UE attempts to detect at least one WUS based on the generated WUS sequence (S1904). The UE attempts to detect a WUS for the UE group to which the corresponding UE belongs (or a UE group WUS) (or a group WUS) based on the WUS sequence for the UE group to which the corresponding UE belongs (or UE group WUS sequence).

If the UE detects the WUS (S 1904), the UE monitors a paging signal (on a PO related to the detected WUS) (S1906). For example, the paging signal may include a control channel related to paging messages (e.g., a PDCCH scrambled with a P-RNTI, a PDCCH for paging, an MPDCCH, or an NPDCCH). If the UE does not detect the WUS (SZ204), the UE may monitor no paging signals during the PO (or may skip paging signal monitoring during the PO).

The methods proposed in the present disclosure have been described based on MTC and/or NB-IoT systems, but the methods proposed in the present disclosure are not limited to MTC and/or NB-IoT. For example, the proposed methods of the present disclosure may be applied to 3GPP 5G NR systems (e.g., systems according to 3GPP TS 38.XXX). Specifically, methods for supporting a UE with reduced capability (RedCap) in the NR system are being discussed. As a method of improving power saving in the RedCap UE, a sequence-based wake-up signal or channel may be used to prevent unnecessary wake up of the UE operating in IDLE mode DRX. If the UE detects a wake-up signal or channel configured for the UE by monitoring (or attempting to detect) the wake-up signal or channel on time and/or frequency-domain resources for the wake-up signal or channel, the UE may monitor and/or receive a subsequent channel (e.g., control or shared channel related to paging) related to the wake-up signal or channel. If the UE does not detect the wake-up signal or channel configured for the UE on the time and/or frequency domain resources for the wake-up signal or channel, the UE may not monitor and/or receive the subsequent channel (e.g., control or shared channel related to paging) related to the wake-up signal or channel (or may skip monitoring and/or reception of the subsequent channel). Similarly, the BS may transmit to the UE a wake-up signal or channel configured for the UE on time and/or frequency-domain resources for the wake-up signal or channel. Then, the BS may transmit a subsequent channel related to the wake-up signal or channel to the UE. To generate/obtain a sequence of a wake-up signal or channel for a RedCap UE (operating in IDLE mode DRX) in the NR system, Method 1 to Method 6 of the present disclosure may be applied equally/similarly.

## H. Communication Systems and Devices to Which Present Disclosure Is Applied

The various details, functions, procedures, proposals, methods, and/or operational flowcharts related to the methods described above in this document may be applied to a variety of fields that require wireless communication/connection (e.g., 5G) between devices.

Hereinafter, a description will be given in detail with reference to drawings. In the following drawings/descriptions, the same reference numerals may denote the same or corresponding hardware blocks, software blocks, or functional blocks unless specified otherwise.

FIG. 20 illustrates a communication system 1 applied to the proposed methods of the present disclosure.

Referring to FIG. 20, the communication system 1 applied to the present disclosure includes wireless devices, BSs, and a network. The wireless devices refer to devices performing communication by radio access technology (RAT) (e.g., 5G New RAT (NR) or LTE), which may also be called communication/radio/5G devices. The wireless devices may include, but no limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle equipped with a wireless communication function, an autonomous driving vehicle, and a vehicle capable of performing vehicle-to-vehicle (V2V) communication. The vehicles may include an unmanned aerial vehicle (UAV) (e.g., a drone). The XR device may include an augmented reality (AR)/virtual reality (VR)/mixed reality (MR) device, and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smartpad, a wearable device (e.g., a smartwatch or smart glasses), and a computer (e.g., a laptop). The home appliance may include a TV, a refrigerator, and a washing machine. The IoT device may include a sensor and a smart meter. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured by using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g. V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f and the BSs 200, or between the BSs 200. Herein, the wireless communication/connections may be established through various RATs (e.g., 5G NR) such as UL/DL communication 150a, sidelink communication 150b (or, D2D communication), or inter-BS communication 150c (e.g. relay, integrated access backhaul (IAB)). A wireless device and a BS/a wireless devices, and BSs may transmit/receive radio signals to/from each other through the wireless communication/connections 150a, 150b, and 150c. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

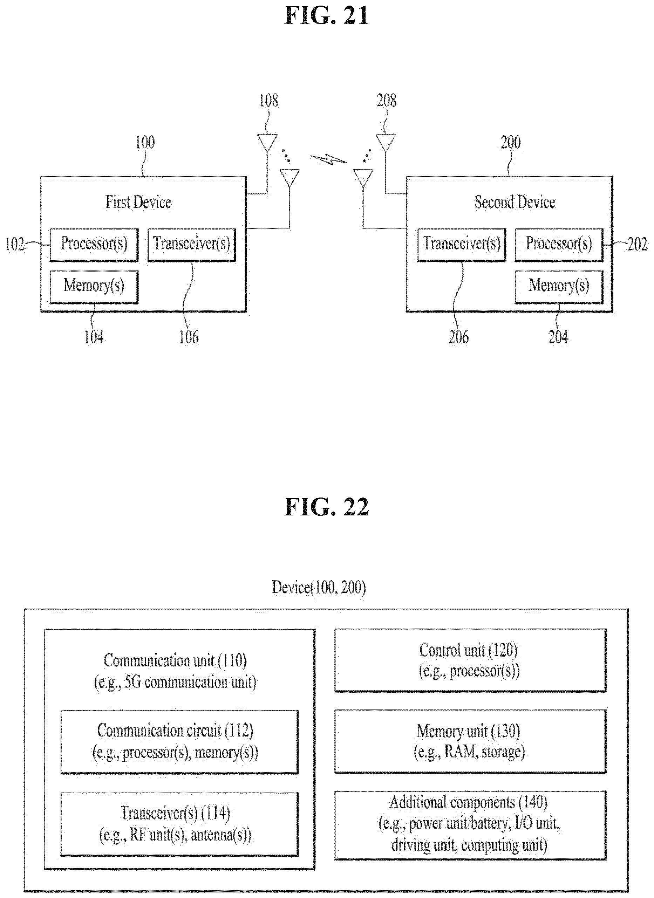

FIG. 21 illustrates wireless devices applicable to the present disclosure.

Referring to FIG. 21, a first wireless device 100 and a second wireless device 200 may transmit radio signals through a variety of RATs (e.g., LTE and NR). Herein, {the first wireless device 100 and the second wireless device 200} may correspond to {the wireless devices 100a to 100f and the BSs 200} and/or {the wireless devices 100a to 100f and the wireless devices 100a to 100f} of FIG. 20.

The first wireless device 100 may include at least one processor 102 and at least one memory 104, and may further include at least one transceiver 106 and/or at least one antenna 108. The processor 102 may control the memory 104 and/or the transceiver 106 and may be configured to implement the descriptions, functions, procedures, proposals, methods, and/or operational flowcharts disclosed in this document. For example, the processor 102 may process information within the memory 104 to generate first information/signal and then transmit a radio signal including the first information/signal through the transceiver 106. The processor 102 may receive a radio signal including second information/signal through the transceiver 106 and then store information obtained by processing the second information/signal in the memory 104. The memory 104 may be coupled to the processor 102 and store various types of information related to operations of the processor 102. For example, the memory 104 may store software code including commands for performing a part or all of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement an RAT (e.g., LTE or NR). The transceiver 106 may be coupled to the processor 102 and transmit and/or receive radio signals through the at least one antenna 108. The transceiver 106 may include a transmitter and/or a receiver. The transceiver 106 may be interchangeably used with an RF unit. In the present disclosure, a wireless device may refer to a communication modem/circuit/chip.

The second wireless device 200 may include at least one processor 202 and at least one memory 204, and may further include at least one transceiver 206 and/or at least one antenna 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signal and then transmit a radio signal including the third information/signal through the transceiver 206. The processor 202 may receive a radio signal including fourth information/signal through the transceiver 206 and then store information obtained by processing the fourth information/signal in the memory 204. The memory 204 may be coupled to the processor 202 and store various types of information related to operations of the processor 202. For example, the memory 204 may store software code including commands for performing a part or all of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement an RAT (e.g., LTE or NR). The transceiver 206 may be coupled to the processor 202 and transmit and/or receive radio signals through the at least one antenna 208. The transceiver 206 may include a transmitter and/or a receiver. The transceiver 206 may be interchangeably used with an RF unit. In the present disclosure, a wireless device may refer to a communication modem/circuit/chip.

Hereinafter, hardware elements of the wireless devices 100 and 200 will be described in greater detail. One or more protocol layers may be implemented by, but not limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more protocol data units (PDUs) and/or one or more service data units (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented in hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operational flowcharts disclosed in this document may be implemented in firmware or software, which may be configured to include modules, procedures, or functions. Firmware or software configured to perform the descriptions, functions, procedures, proposals, methods, and/or operational flowcharts disclosed in this document may be included in the one or more processors 102 and 202, or may be stored in the one or more memories 104 and 204 and executed by the one or more processors 102 and 202. The descriptions, functions, procedures, proposals, methods, and/or operational flowcharts disclosed in this document may be implemented as code, instructions, and/or a set of instructions in firmware or software.

The one or more memories 104 and 204 may be coupled to the one or more processors 102 and 202 and store various types of data, signals, messages, information, programs, code, instructions, and/or commands. The one or more memories 104 and 204 may be configured as read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be coupled to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be coupled to the one or more processors 102 and 202 and transmit and receive radio signals. For example, the one or more processors 102 and 202 may control the one or more transceivers 106 and 206 to transmit user data, control information, or radio signals to one or more other devices. The one or more processors 102 and 202 may control the one or more transceivers 106 and 206 to receive user data, control information, or radio signals from one or more other devices. The one or more transceivers 106 and 206 may be coupled to the one or more antennas 108 and 208 and configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 22 illustrates another example of wireless devices applied to the present disclosure. The wireless devices may be implemented in various forms according to use-cases/services (refer to FIG. 20).

Referring to FIG. 22, wireless devices 100 and 200 may correspond to the wireless devices 100 and 200 of FIG. 21 and may be configured as various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 21. For example, the transceiver(s) 114 may include the one or more transceivers 106 and 206 and/or the one or more antennas 108 and 208 of FIG. 21. The control unit 120 is electrically coupled to the communication unit 110, the memory unit 130, and the additional components 140 and provides overall control to operations of the wireless devices. For example, the control unit 120 may control an electric/mechanical operation of the wireless device based on programs/code/commands/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to the types of wireless devices. For example, the additional components 140 may include at least one of a power unit/battery, an input/output (I/O) unit, a driver, and a computing unit. The wireless device may be configured as, but not limited to, the robot (100a of FIG. 20), the vehicles (100b-1 and 100b-2 of FIG. 20), the XR device (100c of FIG. 20), the hand-held device (100d of FIG. 20), the home appliance (100e of FIG. 20), the IoT device (100f of FIG. 20), a digital broadcasting terminal, a hologram device, a public safety device, an MTC device, a medicine device, a FinTech device (or a finance device), a security device, a climate/environment device, the AI server/device (400 of FIG. 20), the BSs (200 of FIG. 20), a network node, etc. The wireless device may be mobile or fixed according to a use-case/service.

In FIG. 22, all of the various elements, components, units/portions, and/or modules in the wireless devices 100 and 200 may be coupled to each other through a wired interface or at least a part thereof may be wirelessly coupled to each other through the communication unit 110. For example, in each of the wireless devices 100 and 200, the control unit 120 and the communication unit 110 may be coupled by wire, and the control unit 120 and first units (e.g., 130 and 140) may be wirelessly coupled through the communication unit 110. Each element, component, unit/portion, and/or module within the wireless devices 100 and 200 may further include one or more elements. For example, the control unit 120 may be configured as a set of one or more processors. For example, the control unit 120 may be configured as a set of a communication control processor, an application processor, an electronic control unit (ECU), a graphical processing unit, and a memory control processor. In another example, the memory unit 130 may be configured as a random access memory (RAM), a dynamic RAM (DRAM), a read only memory (ROM), a flash memory, a volatile memory, a non-volatile memory, and/or a combination thereof.

An implementation example of FIG. 22 will be described in detail with reference to the drawings.

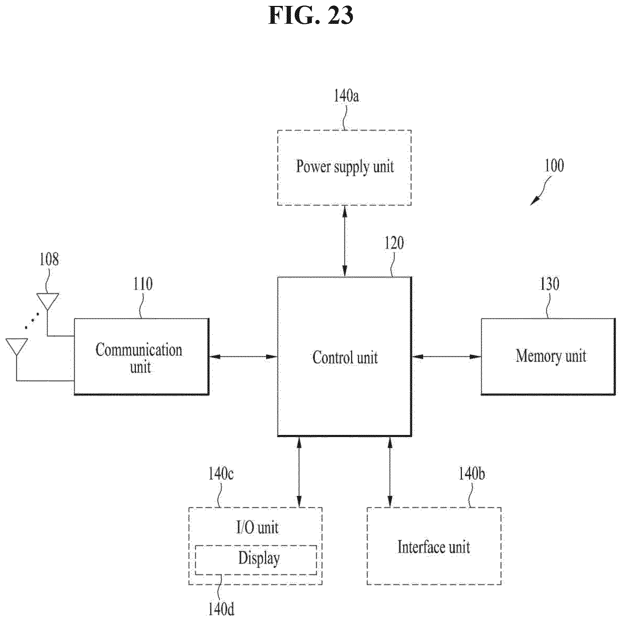

FIG. 23 illustrates a portable device applied to the present disclosure. The portable device may include a smartphone, a smartpad, a wearable device (e.g., a smart watch and smart glasses), and a portable computer (e.g., a laptop). The portable device may be referred to as a mobile station (MS), a user terminal (UT), a mobile subscriber station (MSS), a subscriber station (SS), an advanced mobile station (AMS), or a wireless terminal (WT).

Referring to FIG. 23, a portable device 100 may include an antenna unit 108, a communication unit 110, a control unit 120, a power supply unit 140a, an interface unit 140b, and an I/O unit 140c. The antenna unit 108 may be configured as a part of the communication unit 110. The blocks 110 to 130/140a to 140c correspond to the blocks 110 to 130/140 of FIG. 22, respectively.

The communication unit 110 may transmit and receive signals (e.g., data and control signals) to and from another wireless device and a BS. The control unit 120 may perform various operations by controlling elements of the portable device 100. The control unit 120 may include an application processor (AP). The memory unit 130 may store data/parameters/programs/code/commands required for operation of the portable device 100. Further, the memory unit 130 may store input/output data/information. The power supply unit 140a may supply power to the portable device 100, and include a wired/wireless charging circuit and a battery. The interface unit 140b may include various ports (e.g., an audio I/O port and a video I/O port) for connectivity to external devices The I/O unit 140c may acquire information/signals (e.g., touch, text, voice, images, and video) input by a user, and store the acquired information/signals in the memory unit 130. The communication unit 110 may receive or output video information/signal, audio information/signal, data, and/or information input by the user. The I/O unit 140c may include a camera, a microphone, a user input unit, a display 140d, a speaker, and/or a haptic module.

For example, for data communication, the I/O unit 140c may acquire information/signals (e.g., touch, text, voice, images, and video) received from the user and store the acquired information/signal sin the memory unit 130. The communication unit 110 may convert the information/signals to radio signals and transmit the radio signals directly to another device or to a BS. Further, the communication unit 110 may receive a radio signal from another device or a BS and then restore the received radio signal to original information/signal. The restored information/signal may be stored in the memory unit 130 and output in various forms (e.g., text, voice, an image, video, and a haptic effect) through the I/O unit 140c.

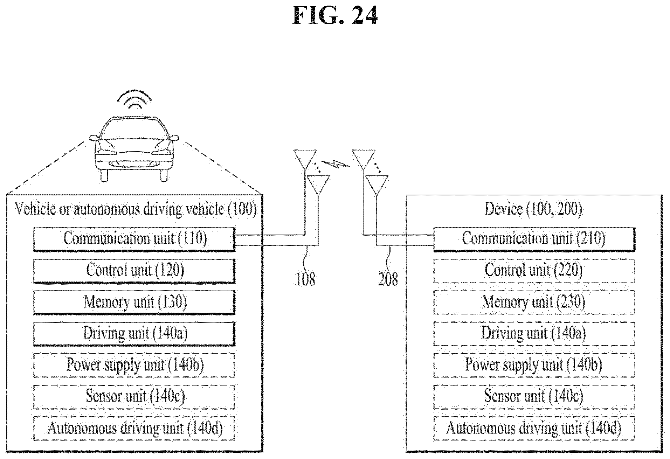

FIG. 24 illustrates a vehicle or an autonomous driving vehicle applied to the present disclosure. The vehicle or autonomous driving vehicle may be configured as a mobile robot, a car, a train, a manned/unmanned aerial vehicle (AV), a ship, or the like.

Referring to FIG. 24, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to travel on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire vehicle state information, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement a technology for maintaining a lane on which a vehicle is driving, a technology for automatically adjusting speed, such as adaptive cruise control, a technology for autonomously traveling along a determined path, a technology for traveling by automatically setting a path, when a destination is set, and the like.

For example, the communication unit 110 may receive map data, traffic information data, and so on from an external server. The autonomous driving unit 140d may generate an autonomous driving path and a driving plan from the obtained data. The control unit 120 may control the driving unit 140a such that the vehicle or autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain vehicle state information and/or ambient environment

**EP 3 993 514 B1**

information. The autonomous driving unit 140d may update the autonomous driving path and the driving plan based on the newly obtained data/information. The communication unit 110 may transmit information about a vehicle position, the autonomous driving path, and/or the driving plan to the external server. The external server may predict traffic information data using AI technology or the like, based on the information collected from vehicles or autonomous driving vehicles and provide the predicted traffic information data to the vehicles or the autonomous driving vehicles.

**INDUSTRIAL APPLICABILITY**

The present disclosure is applicable to wireless communication devices such as a User Equipment (UE) and a Base Station (BS) operating in various wireless communication systems including 3GPP LTE/LTE-A/SG (or New RAT (NR)).

**Claims**

1. A method of receiving a group wake-up signal, WUS, by a device (100) in a wireless communication system, the method comprising:

   obtaining, by the device (100), configuration information regarding WUS resources for the group WUS;
   receiving (S1904), by the device (100), the group WUS based on the configuration information regarding the WUS resources; and
   monitoring (S1906), by the device, a paging signal based on the received group WUS,
   the WUS resources for the group WUS include at least one of a first WUS resource that is shared with a non-group WUS and a second WUS resource that is not shared with the non-group WUS,
   the second WUS resource is configured immediately prior to the first WUS resource in time,
   **characterized in that**
   a WUS sequence of the group WUS is obtained based on a scrambling sequence, the scrambling sequence being initialized with a value satisfying a formula:

$$c_g \cdot 2^{29} + (N_{ID}^{Ncell} + 1)\left(\left(10 n_{f\_start\_PO} + \left\lfloor \frac{n_{s\_start\_PO}}{2} \right\rfloor\right) \bmod 2048 + 1\right) 2^9 + N_{ID}^{Ncell}$$

   where i) $c_g$ denotes a WUS resource identifier, ID, ii) $N_{ID}^{Ncell}$ denotes a cell ID, iii) $n_{f\_start\_PO}$ denotes an initial frame of an initial paging occasion for the group WUS, iv) $n_{s\_start\_PO}$ denotes an initial slot of the initial paging occasion, v) 11 denotes a floor operation, and vi) mod denotes a modulo operation,
   the WUS resource ID is 0 for the first WUS resource, and
   the WUS resource ID is 1 for the second WUS resource.

2. The method according to claim 1, wherein the first WUS resource and the second WUS resource are related to a same paging occasion.

3. A device (100) for wireless communication, the device (100) comprising:

   at least one memory (104) configured to store instructions: and
   at least one processor (102) configured to perform operations by executing the instructions, the operations comprising:

      obtaining configuration information regarding WUS resources for a group wake-up signal, WUS;
      receiving (S1904) the group WUS based on the configuration information regarding the WUS resources; and
      monitoring (S1906) a paging signal based on the received group WUS,
      the WUS resources for the group WUS include at least one of a first WUS resource that is shared with a non-group WUS and a second WUS resource that is not shared with the non-group WUS,
      the second WUS resource is configured immediately prior to the first WUS resource in time,
      **characterized in that**
      a WUS sequence of the group WUS is obtained based on a scrambling sequence, the scrambling sequence being initialized with a value satisfying a formula:

$$c_g \cdot 2^{29} + (N_{ID}^{Ncell} + 1)\left(\left(10n_{f\_start\_PO} + \left\lfloor \frac{n_{s\_start\_PO}}{2} \right\rfloor\right) \bmod 2048 + 1\right)2^9 + N_{ID}^{Ncell}$$

where i) $c_g$ denotes a WUS resource identifier, ID, ii) $N_{ID}^{Ncell}$ denotes a cell ID, iii) $n_{f\_start\_PO}$ denotes an initial frame of an initial paging occasion for the group WUS, iv) $n_{s\_start\_PO}$ denotes an initial slot of the initial paging occasion, v) ⌞⌟ denotes a floor operation, and vi) mod denotes a modulo operation,
the WUS resource ID is 0 for the first WUS resource, and
the WUS resource ID is 1 for the second WUS resource.

4. The device (100) according to claim 3, wherein the first WUS resource and the second WUS resource are related to a same paging occasion.

5. The device (100) according to claim 3, further comprising:
a transceiver (106) configured to transmit or receive a wireless signal under control of the processor (102).

6. The device (100) according to one of claims 3 to 5, wherein the device (100) is a user equipment, UE, configured to operate in a wireless communication system.

7. The device (100) according to claim 3, wherein the device (100) is an application specific integrated circuit, ASIC, or a digital signal processing device, configured to control a user equipment, UE, operating in a wireless communication system.

8. A computer-readable medium storing instructions, when executed by a processor (102), implement operations according to claim 1 or 2.

9. A method of transmitting a group wake-up signal, WUS, by a base station (200), BS, in a wireless communication system, the method comprising:

transmitting, to a device (100), configuration information regarding WUS resources for the group WUS;
transmitting (S1804), to the device (100), the group WUS based on the configuration information regarding the WUS resources; and
transmitting (S1806), to the device (100), a paging signal based on the group WUS,
the WUS resources for the group WUS include at least one of a first WUS resource that is shared with a non-group WUS and a second WUS resource that is not shared with the non-group WUS,
the second WUS resource is configured immediately prior to the first WUS resource in time,
**characterized in that**
a WUS sequence of the group WUS is obtained based on a scrambling sequence, the scrambling sequence being initialized with a value satisfying a formula:

$$c_g \cdot 2^{29} + (N_{ID}^{Ncell} + 1)\left(\left(10n_{f\_start\_PO} + \left\lfloor \frac{n_{s\_start\_PO}}{2} \right\rfloor\right) \bmod 2048 + 1\right)2^9 + N_{ID}^{Ncell}$$

where i) $c_g$ denotes a WUS resource identifier, ID, ii) $N_{ID}^{Ncell}$ denotes a cell ID, iii) $n_{f\_start\_PO}$ denotes an initial frame of an initial paging occasion for the group WUS, iv) $n_{s\_start\_PO}$ denotes an initial slot of the initial paging occasion, v) ⌞⌟ denotes a floor operation, and vi) mod denotes a modulo operation,
the WUS resource ID is 0 for the first WUS resource, and
the WUS resource ID is 1 for the second WUS resource.

10. The method according to claim 9, wherein the first WUS resource and the second WUS resource are related to a same paging occasion.

**11.** A base station (200), BS, comprising:

at least one memory (204) configured to store instructions; and
at least one processor (202) configured to perform operations by executing the operations,
wherein the operations comprise:

transmitting, to a device (100), configuration information regarding WUS resources for a group wake-up signal, WUS;
transmitting (S1804), to the device (100), the group WUS based on the configuration information regarding the WUS resources; and
transmitting (S1806), to the device (100), a paging signal based on the group WUS,
the WUS resources for the group WUS include at least one of a first WUS resource that is shared with a non-group WUS and a second WUS resource that is not shared with the non-group WUS,
the second WUS resource is configured immediately prior to the first WUS resource in time,
**characterized in that**
a WUS sequence of the group WUS is obtained based on a scrambling sequence, the scrambling sequence being initialized with a value satisfying a formula:

$$c_g \cdot 2^{29} + (N_{ID}^{Ncell} + 1)\left(\left(10n_{f\_start\_PO} + \left\lfloor \frac{n_{s\_start\_PO}}{2} \right\rfloor\right) mod\ 2048 + 1\right)2^9 + N_{ID}^{Ncell}$$

where i) $c_g$ denotes a WUS resource identifier, ID, ii) $N_{ID}^{Ncell}$ denotes a cell ID, iii) $n_{f\_start\_PO}$ denotes an initial frame of an initial paging occasion for the group WUS, iv) $n_{s\_start\_PO}$ denotes an initial slot of the initial paging occasion, v) $\lfloor \rfloor$ denotes a floor operation, and vi) mod denotes a modulo operation,
the WUS resource ID is 0 for the first WUS resource, and
the WUS resource ID is 1 for the second WUS resource.

**Patentansprüche**

**1.** Verfahren zum Empfangen eines Gruppen-Aufwecksignals, WUS-Signals, durch eine Vorrichtung (100) in einem drahtlosen Kommunikationssystem, wobei das Verfahren umfasst:

Erhalten, durch die Vorrichtung (100), von Konfigurationsinformationen bezüglich der WUS-Ressourcen für das Gruppen-WUS;
Empfangen (S1904), durch die Vorrichtung (100), des Gruppen-WUS basierend auf den Konfigurationsinformationen bezüglich der WUS-Ressourcen; und
Überwachen, durch die Vorrichtung, (S1906) eines Paging-Signals basierend auf dem empfangenen Gruppen-WUS,
die WUS-Ressourcen für das Gruppen-WUS eine erste WUS-Ressource, die gemeinsam mit einem Nicht-Gruppen-WUS genutzt wird und/oder eine zweite WUS-Ressource, die nicht gemeinsam mit dem Nicht-Gruppen-WUS genutzt wird, beinhaltet,
die zweite WUS-Ressource zeitlich unmittelbar vor der ersten WUS-Ressource konfiguriert ist, **dadurch gekennzeichnet, dass**
eine WUS-Sequenz des Gruppen-WUS basierend auf einer Verwürfelungssequenz erhalten wird, wobei die Verwürfelungssequenz mit einem Wert initialisiert wird, der eine folgende Formel erfüllt:

$$c_g \cdot 2^{29} + \left(N_{ID}^{Ncell} + 1\right)\left(\left(10n_{f\_start\_PO} + \left\lfloor \frac{n_{s\_start\_PO}}{2} \right\rfloor\right) mod\ 2048 + 1\right)2^9 + N_{ID}^{Ncell}$$

wo i) $c_g$ einen WUS-Ressourcen-Identifikator, ID, bezeichnet, ID, ii) $N_{ID}^{Ncell}$ eine Zellen-ID bezeichnet, iii) $n_{f\_start\_PO}$ einen anfänglichen Frame eines anfänglichen Paging-Anlasses für das Gruppen-WUS bezeichnet, iv) $n_{s\_start\_PO}$ einen anfänglichen Slot des anfänglichen Paging-Anlasses bezeichnet, v) $\lfloor \rfloor$ eine Floor-Operation

bezeichnet und vi) mod eine Modulo-Operation bezeichnet, die WUS-Ressourcen-ID für die erste WUS-Ressource gleich 0 ist und
die WUS-Ressourcen-ID für die zweite WUS-Ressource gleich 1 ist.

2. Verfahren nach Anspruch 1, wobei sich die erste WUS-Ressource und die zweite WUS-Ressource auf denselben Paging-Anlass beziehen.

3. Vorrichtung (100) zur drahtlosen Kommunikation, wobei die Vorrichtung (100) umfasst:

zumindest einen Speicher (104), der dazu konfiguriert ist, Anweisungen zu speichern: und
zumindest einen Prozessor (102), der dazu konfiguriert ist, Operationen durch Ausführen der Anweisungen durchzuführen, wobei die Operationen umfassen:

Erhalten von Konfigurationsinformationen bezüglich der WUS-Ressourcen für ein Gruppen-Aufwecksignal, WUS;
Empfangen (S1904) des Gruppen-WUS basierend auf den Konfigurationsinformationen bezüglich der WUS-Ressourcen; und
Überwachen (S1906) eines Paging-Signals basierend auf dem empfangenen Gruppen-WUS,
die WUS-Ressourcen für das Gruppen-WUS eine erste WUS-Ressource, die gemeinsam mit einem Nicht-Gruppen-WUS genutzt wird und/oder eine zweite WUS-Ressource, die nicht gemeinsam mit dem Nicht-Gruppen-WUS genutzt wird, beinhaltet,
die zweite WUS-Ressource zeitlich unmittelbar vor der ersten WUS-Ressource konfiguriert ist, **dadurch gekennzeichnet, dass**
eine WUS-Sequenz des Gruppen-WUS basierend auf einer Verwürfelungssequenz erhalten wird, wobei die Verwürfelungssequenz mit einem Wert initialisiert wird,
der eine folgende Formel erfüllt:

$$c_g \cdot 2^{29} + \left(N_{ID}^{Ncell} + 1\right)\left(\left(10 n_{f\_start\_PO} + \left\lfloor \frac{n_{s\_start\_PO}}{2} \right\rfloor\right) \bmod 2048 + 1\right) 2^9 + N_{ID}^{Ncell}$$

wo i) $c_g$ einen WUS-Ressourcen-Identifikator, ID, bezeichnet, ii) $N_{ID}^{Ncell}$ eine Zellen-ID bezeichnet, iii) $n_{f\_start\_PO}$ einen anfänglichen Frame eines anfänglichen Paging-Anlasses für das Gruppen-WUS bezeichnet, iv) $n_{s\_start\_PO}$ einen anfänglichen Slot des anfänglichen Paging-Anlasses bezeichnet, v) ⌊ ⌋ eine Floor-Operation bezeichnet und vi) mod eine Modulo-Operation bezeichnet, die WUS-Ressourcen-ID für die erste WUS-Ressource gleich 0 ist und
die WUS-Ressourcen-ID für die zweite WUS-Ressource gleich 1 ist.

4. Vorrichtung (100) nach Anspruch 3, wobei sich die erste WUS-Ressource und die zweite WUS-Ressource auf denselben Paging-Anlass beziehen.

5. Vorrichtung (100) nach Anspruch 3, ferner umfassend:
einen Transceiver (106), der dazu konfiguriert ist, ein drahtloses Signal unter der Steuerung des Prozessors (102) zu übertragen oder zu empfangen.

6. Vorrichtung (100) nach einem der Ansprüche 3 bis 5, wobei die Vorrichtung (100) eine Benutzerausrüstung (UE) ist, die dazu ausgelegt ist, in einem drahtlosen Kommunikationssystem zu arbeiten.

7. Vorrichtung (100) nach Anspruch 3, wobei die Vorrichtung (100) eine anwendungsspezifische integrierte Schaltung, ASIC, oder eine digitale Signalverarbeitungsvorrichtung ist, die dazu konfiguriert ist, eine Benutzerausrüstung, UE, zu steuern, die in einem drahtlosen Kommunikationssystem arbeitet.

8. Computerlesbares Medium, das Anweisungen speichert, die, wenn sie von einem Prozessor (102) ausgeführt werden, Operationen nach Anspruch 1 oder 2 implementieren.

9. Verfahren zum Übertragen eines Gruppen-Auwecksignals, WUS, durch eine Basisstation (200), BS, in einem drahtlosen Kommunikationssystem, wobei das Verfahren umfasst:

Übertragen, an eine Vorrichtung (100), von Konfigurationsinformationen bezüglich der WUS-Ressourcen für das Gruppen-WUS;
Übertragen (S1804), an die Vorrichtung (100), des Gruppen-WUS basierend auf den Konfigurationsinformationen bezüglich der WUS-Ressourcen; und
Übertragen (S1806) eines auf dem Gruppe-WUS basierenden Paging-Signals an die Vorrichtung (100),
die WUS-Ressourcen für das Gruppen-WUS eine erste WUS-Ressource, die gemeinsam mit einem Nicht-Gruppen-WUS genutzt wird und/oder eine zweite WUS-Ressource, die nicht gemeinsam mit dem Nicht-Gruppen-WUS genutzt wird, beinhaltet,
die zweite WUS-Ressource zeitlich unmittelbar vor der ersten WUS-Ressource konfiguriert ist, **dadurch gekennzeichnet, dass**
eine WUS-Sequenz des Gruppen-WUS basierend auf einer Verwürfelungssequenz erhalten wird, wobei die Verwürfelungssequenz mit einem Wert initialisiert wird, der eine folgende Formel erfüllt:

$$c_g \cdot 2^{29} + \left(N_{ID}^{Ncell} + 1\right)\left(\left(10n_{f\_start\_PO} + \left\lfloor \frac{n_{s\_start\_PO}}{2}\right\rfloor\right) \bmod 2048 + 1\right)2^9 + N_{ID}^{Ncell}$$

wo i) $c_g$ einen WUS-Ressourcen-Identifikator, ID, bezeichnet, ii) $N_{ID}^{Ncell}$ eine Zellen-ID bezeichnet, iii) $n_{f\_start\_PO}$ einen anfänglichen Frame eines anfänglichen Paging-Anlasses für das Gruppen-WUS bezeichnet, iv) $n_{s\text{-}start\text{-}PO}$ einen anfänglichen Slot des anfänglichen Paging-Anlasses bezeichnet, v) $\lfloor \; \rfloor$ eine Floor-Operation bezeichnet und vi) mod eine Modulo-Operation bezeichnet, die WUS-Ressourcen-ID für die erste WUS-Ressource gleich 0 ist und
die WUS-Ressourcen-ID für die zweite WUS-Ressource gleich 1 ist.

10. Verfahren nach Anspruch 9, wobei sich die erste WUS-Ressource und die zweite WUS-Ressource auf denselben Paging-Anlass beziehen.

11. Basisstation (200), BS, umfassend:

zumindest einen Speicher (204), der dazu konfiguriert ist, Anweisungen zu speichern: und
zumindest einen Prozessor (202), der dazu konfiguriert ist, Operationen durch Ausführen der Operationen durchzuführen, wobei die Operationen umfassen:

Übertragen, an eine Vorrichtung (100), von Konfigurationsinformationen bezüglich der WUS-Ressourcen für ein Gruppen-Aufwecksignal, Gruppen-WUS;
Übertragen (S1804), an die Vorrichtung (100), des Gruppen-WUS basierend auf den Konfigurationsinformationen bezüglich der WUS-Ressourcen; und
Übertragen (S1806) eines auf dem Gruppe-WUS basierenden Paging-Signals an die Vorrichtung (100),
die WUS-Ressourcen für das Gruppen-WUS eine erste WUS-Ressource, die gemeinsam mit einem Nicht-Gruppen-WUS genutzt wird und/oder eine zweite WUS-Ressource, die nicht gemeinsam mit dem Nicht-Gruppen-WUS genutzt wird, beinhaltet,
die zweite WUS-Ressource zeitlich unmittelbar vor der ersten WUS-Ressource konfiguriert ist, **dadurch gekennzeichnet, dass**
eine WUS-Sequenz des Gruppen-WUS basierend auf einer Verwürfelungssequenz erhalten wird, wobei die Verwürfelungssequenz mit einem Wert initialisiert wird,
der eine folgende Formel erfüllt:

$$c_g \cdot 2^{29} + \left(N_{ID}^{Ncell} + 1\right)\left(\left(10n_{f\_start\_PO} + \left\lfloor \frac{n_{s\_start\_PO}}{2}\right\rfloor\right) \bmod 2048 + 1\right)2^9 + N_{ID}^{Ncell}$$

wo i) $c_g$ einen WUS-Ressourcen-Identifikator, ID, bezeichnet, ii) $N_{ID}^{Ncell}$ eine Zellen-ID bezeichnet, iii) $n_{f\_start\_PO}$ einen anfänglichen Frame eines anfänglichen Paging-Anlasses für das Gruppen-WUS bezeich-

net, iv) n<sub>s_start_PO</sub> einen anfänglichen Slot des anfänglichen Paging-Anlasses bezeichnet, v) ⌊ ⌋ eine Floor-Operation bezeichnet und vi) mod eine Modulo-Operation bezeichnet, die WUS-Ressourcen-ID für die erste WUS-Ressource gleich 0 ist und
die WUS-Ressourcen-ID für die zweite WUS-Ressource gleich 1 ist.

## Revendications

1. Procédé de réception d'un signal de réveil, WUS, de groupe, par un dispositif (100) situé dans un système de communication sans fil, le procédé comprenant les étapes consistant à :

   obtenir, par le dispositif (100), des informations de configuration concernant des ressources de WUS destinées au WUS de groupe ;
   recevoir (S1904), par le dispositif (100), le WUS de groupe sur la base des informations de configuration concernant les ressources de WUS ; et
   surveiller (S1906), par le dispositif, un signal de radiorecherche sur la base du WUS de groupe reçu,
   les ressources de WUS destinées au WUS de groupe contiennent au moins une ressource parmi une première ressource de WUS qui est partagée avec un WUS hors-groupe et une deuxième ressource de WUS qui n'est pas partagée avec le WUS hors-groupe,
   la deuxième ressource de WUS est configurée juste avant la première ressource de WUS dans le temps,
   **caractérisé en ce que**
   une séquence de WUS du WUS de groupe est obtenue sur la base d'une séquence de brouillage, la séquence de brouillage étant initialisée avec une valeur vérifiant une formule :

$$c_g \cdot 2^{29} + \left( N_{ID}^{Ncell} + 1 \right) \left( \left( 10 n_{f\_start\_PO} + \left\lfloor \frac{n_{s\_start\_PO}}{2} \right\rfloor \right) \bmod 2048 + 1 \right) 2^9 + N_{ID}^{Ncell}$$

   où i) $c_g$ désigne un identifiant, ID, de ressource de WUS, ii) $N_{ID}^{Ncell}$ désigne un ID de cellule, iii) $n_{f\_start\_PO}$ désigne une trame initiale d'une occasion de radiorecherche initiale concernant le WUS de groupe, iv) $n_{s\_start\_PO}$ désigne un créneau initial de l'occasion de radiorecherche initiale, v) ⌊ ⌋ désigne une opération floor, et vi) mod désigne une opération module,
   l'ID de ressource de WUS est 0 pour la première ressource de WUS, et
   l'ID de ressource de WUS est 1 pour la deuxième ressource de WUS.

2. Procédé selon la revendication 1, dans lequel la première ressource de WUS et la deuxième ressource de WUS sont liées à une même occasion de radiorecherche.

3. Dispositif (100) pour la communication sans fil, le dispositif (100) comprenant :

   au moins une mémoire (104) configurée pour stocker des instructions ; et
   au moins un processeur (102) configuré pour effectuer des opérations en exécutant les instructions, les opérations comprenant les étapes consistant à :

   obtenir des informations de configuration concernant des ressources de WUS destinées à un signal de réveil, WUS, de groupe ;
   recevoir (S1904) le WUS de groupe sur la base des informations de configuration concernant les ressources de WUS ; et
   surveiller (S1906) un signal de radiorecherche sur la base du WUS de groupe reçu,
   les ressources de WUS destinées au WUS de groupe contiennent au moins une ressource parmi une première ressource de WUS qui est partagée avec un WUS hors-groupe et une deuxième ressource de WUS qui n'est pas partagée avec le WUS hors-groupe,
   la deuxième ressource de WUS est configurée juste avant la première ressource de WUS dans le temps,
   **caractérisé en ce que**
   une séquence de WUS du WUS de groupe est obtenue sur la base d'une séquence de brouillage, la séquence de brouillage étant initialisée avec une valeur vérifiant une formule :

$$c_g \cdot 2^{29} + \left(N_{ID}^{Ncell} + 1\right)\left(\left(10n_{f\_start\_PO} + \left\lfloor\frac{n_{s\_start\_PO}}{2}\right\rfloor\right) \bmod 2048 + 1\right)2^9 + N_{ID}^{Ncell}$$

où i) $c_g$ désigne un identifiant, ID, de ressource de WUS, ii) $N_{ID}^{Ncell}$ désigne un ID de cellule, iii) $n_{f\_start\_PO}$ désigne une trame initiale d'une occasion de radiorecherche initiale concernant le WUS de groupe, iv) $n_{s\_start\_PO}$ désigne un créneau initial de l'occasion de radiorecherche initiale, v) $\lfloor \ \rfloor$ désigne une opération floor, et vi) mod désigne une opération module,
l'ID de ressource de WUS est 0 pour la première ressource de WUS, et
l'ID de ressource de WUS est 1 pour la deuxième ressource de WUS.

4. Dispositif (100) selon la revendication 3, dans lequel la première ressource de WUS et la deuxième ressource de WUS sont liées à une même occasion de radiorecherche.

5. Dispositif (100) selon la revendication 3, comprenant également :
un émetteur-récepteur (106) configuré pour transmettre ou recevoir un signal sans fil sous la commande du processeur (102).

6. Dispositif (100) selon l'une quelconque des revendications 3 à 5, le dispositif (100) étant un équipement utilisateur, UE, configuré pour fonctionner dans un système de communication sans fil.

7. Dispositif (100) selon la revendication 3, le dispositif (100) étant un circuit intégré spécifique à une application, ASIC, ou un dispositif de traitement de signal numérique, configurés pour commander un équipement utilisateur, UE, fonctionnant dans un système de communication sans fil.

8. Support lisible par ordinateur stockant des instructions qui, lorsqu'elles sont exécutées par un processeur (102), mettent en œuvre des opérations selon la revendication 1 ou 2.

9. Procédé de transmission d'un signal de réveil, WUS, de groupe, par une station de base (200), BS, située dans un système de communication sans fil, le procédé comprenant les étapes consistant à :

transmettre, à un dispositif (100), des informations de configuration concernant des ressources de WUS destinées au WUS de groupe ;
transmettre (S1804), au dispositif (100), le WUS de groupe sur la base des informations de configuration concernant les ressources de WUS ; et
transmettre (S1806), au dispositif (100), un signal de radiorecherche sur la base du WUS de groupe reçu,
les ressources de WUS destinées au WUS de groupe contiennent au moins une ressource parmi une première ressource de WUS qui est partagée avec un WUS hors-groupe et une deuxième ressource de WUS qui n'est pas partagée avec le WUS hors-groupe,
la deuxième ressource de WUS est configurée juste avant la première ressource de WUS dans le temps,
**caractérisé en ce que**
une séquence de WUS du WUS de groupe est obtenue sur la base d'une séquence de brouillage, la séquence de brouillage étant initialisée avec une valeur vérifiant une formule :

$$c_g \cdot 2^{29} + \left(N_{ID}^{Ncell} + 1\right)\left(\left(10n_{f\_start\_PO} + \left\lfloor\frac{n_{s\_start\_PO}}{2}\right\rfloor\right) \bmod 2048 + 1\right)2^9 + N_{ID}^{Ncell}$$

où i) $c_g$ désigne un identifiant, ID, de ressource de WUS, ii) $N_{ID}^{Ncell}$ désigne un ID de cellule, iii) $n_{f\_start\_PO}$ désigne une trame initiale d'une occasion de radiorecherche initiale concernant le WUS de groupe, iv) $n_{s\_start\_PO}$ désigne un créneau initial de l'occasion de radiorecherche initiale, v) $\lfloor \ \rfloor$ désigne une opération floor, et vi) mod désigne une opération module,
l'ID de ressource de WUS est 0 pour la première ressource de WUS, et
l'ID de ressource de WUS est 1 pour la deuxième ressource de WUS.

10. Procédé selon la revendication 9, dans lequel la première ressource de WUS et la deuxième ressource de WUS sont liées à une même occasion de radiorecherche.

11. Station de base (200), BS, comprenant :

au moins une mémoire (204) configurée pour stocker des instructions ; et
au moins un processeur (202) configuré pour effectuer des opérations en exécutant les opérations, les opérations comprenant les étapes consistant à :

transmettre, à un dispositif (100), des informations de configuration concernant des ressources de WUS destinées à un signal de réveil, WUS, de groupe ;
transmettre (S1804), au dispositif (100), le WUS de groupe sur la base des informations de configuration concernant les ressources de WUS ; et
transmettre (S1806), au dispositif (100), un signal de radiorecherche sur la base du WUS de groupe reçu, les ressources de WUS destinées au WUS de groupe contiennent au moins une ressource parmi une première ressource de WUS qui est partagée avec un WUS hors-groupe et une deuxième ressource de WUS qui n'est pas partagée avec le WUS hors-groupe,
la deuxième ressource de WUS est configurée juste avant la première ressource de WUS dans le temps, **caractérisé en ce que**
une séquence de WUS du WUS de groupe est obtenue sur la base d'une séquence de brouillage, la séquence de brouillage étant initialisée avec une valeur vérifiant une formule :

$$c_g \cdot 2^{29} + \left(N_{ID}^{Ncell} + 1\right)\left(\left(10n_{f\_start\_PO} + \left\lfloor\frac{n_{s\_start\_PO}}{2}\right\rfloor\right) \bmod 2048 + 1\right)2^9 + N_{ID}^{Ncell}$$

où i) $c_g$ désigne un identifiant, ID, de ressource de WUS, ii) $N_{ID}^{Ncell}$ désigne un ID de cellule, iii) $n_{f\_start\_PO}$ désigne une trame initiale d'une occasion de radiorecherche initiale concernant le WUS de groupe, iv) $n_{s\_start\_PO}$ désigne un créneau initial de l'occasion de radiorecherche initiale, v) $\lfloor\ \rfloor$ désigne une opération floor, et vi) mod désigne une opération module,
l'ID de ressource de WUS est 0 pour la première ressource de WUS, et
l'ID de ressource de WUS est 1 pour la deuxième ressource de WUS.

# FIG. 1

Initial Cell Search — PSS / SSS & [DLRS] & PBCH — S11

System Information Reception — PDCCH/ PDSCH (BCCH) — S12

Random Access Procedure — PRACH (S13), PDCCH/ PDSCH (S14), PUSCH (S15), PDCCH/ PDSCH (S16)

General DL/UL Tx/Rx — S18 — PDCCH/ PDSCH, PUSCH/ PUCCH — S17

• DL/UL ACK/NACK
• UE CQI/PMI/Rank Report using PUSCH and PUCCH

# FIG. 2

Radio frame

| #0 | #1 | #2 | ... | #18 | #19 |

Slot

Sub-frame

( a )

One radio frame, $T_S = 307200T = 10ms$

One half-frame, $T_S = 153600T = 5ms$

One slot $T_{slot} = 15360T_S$

$30720T_S$

| Subframe#0 | | | | Subframe#2 | Subframe3 | Subframe#4 | Subframe#5 | | | | Subframe#7 | Subframe#8 | Subframe#9 |

One subframe, $30720T_S$

DwPTS  GP  UpPTS

DwPTS  GP  UpPTS

( b )

EP 3 993 514 B1

# FIG. 3

One DL/UL slot

$N_{symb}^{DL/UL}$ symbols

$k = N_{RB}^{DL/UL} N_{sc-1}^{RB}$

Resource block
$N_{symb}^{DL/UL} N_{sc}^{RB}$ resource elements

Resource element (k,l)

$N_{symb}^{DL/UL} \times N_{sc}^{RB}$ Subcarriers

$N_{sc}^{RB}$ Subcarriers

$k = 0$

$1 = 0$

$1 = N_{symb}^{DL/UL} - 1$

# FIG. 4

Control Area          Data Area

1st slot          2nd slot

Frequency

Subframe

Time

# FIG. 5

# FIG. 6

# FIG. 7

(a)

(b)

# FIG. 8

1 SF

Frequency
hopping

RF retuning

Frequency
hopping

Frequency
hopping

PDCCH          MPDCCH

PDSCH for legacy UE     PDSCH for MTC UE

# FIG. 9

Even numbered frame (10ms)    Odd numbered frame (10ms)

12 subcarriers (180 kHz)

0  1  2  3  4  5  6  7  8  9  0  1  2  3  4  5  6  7  8  9

subframe (1ms)

NPBCH

NPDCCH (NPDSCH)

NPSS

NSSS

# FIG. 10

# FIG. 11

# FIG. 12

| WUS resource 1 | WUS resource 0 | | PO |

Maximum WUS duration 1 | Maximum WUS duration 0 | WUS-to-PO gap

Time →

# FIG. 13

Frequency ↑

2 PRBs

Narrow Band (6 PRBs)

| WUS resource 2A | WUS resource 1A |
| WUS resource 2B | WUS resource 1B |

PO

Maximum WUS duration 2 | Maximum WUS duration 1 | WUS-to-PO gap

Time →

# FIG. 14

# FIG. 15

# FIG. 16

# FIG. 17

Frequency

Narrow Band (6 PRBs)

2 PRBs

| WUS resource 2A: $c_g=3$ | WUS resource 1A: $c_g=1$ |
| WUS resource 2B: $c_g=2$ | WUS resource 1B: $c_g=0$ (Legacy WUS resource) |

PO

Time

Maximum WUS duration 2 | Maximum WUS duration 1 | WUS-to-PO gap

# FIG. 18

Generate WUS sequence — S1802

Transmit WUS based on WUS generation — S1804

Transmit paging related to WUS — S1806

# FIG. 19

| | |
|---|---|
| Generate WUS sequence | S1902 |

↓

| | |
|---|---|
| Attempt to detect WUS based on WUS generation | S1904 |

↓

| | |
|---|---|
| Monitoring paging based on detection of WUS | S1906 |

# FIG. 20

EP 3 993 514 B1

# FIG. 21

# FIG. 22

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

46

# FIG. 23

EP 3 993 514 B1

# FIG. 24

| Vehicle or autonomous driving vehicle (100) |
| --- |
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
| --- |
| Communication unit (210) |
| Control unit (220) |
| Memory unit (230) |
| Driving unit (140a) |
| Power supply unit (140b) |
| Sensor unit (140c) |
| Autonomous driving unit (140d) |

48

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190090193 A1

**Non-patent literature cited in the description**

- UE-group wake-up signal. *3GPP documentR1-1901502*
- UE-group wake-up signal. *3GPP document R1-1905971*